Europäisches Patentamt

European Patent Office

Office européen des brevets

(19)

(11) Veröffentlichungsnummer : **0 505 591 B1**

(12) # EUROPÄISCHE PATENTSCHRIFT

(45) Veröffentlichungstag der Patentschrift :
**20.07.94 Patentblatt 94/29**

(51) Int. Cl.$^5$ : **H02M 5/45,** H02P 5/40

(21) Anmeldenummer : **91104819.7**

(22) Anmeldetag : **26.03.91**

(54) **Verfahren und Schaltungsanordnung zur Regelung eines zweidimensionalen Vektors einer Strecke mittels eines wertediskreten Stellgliedes mit begrenzter Schaltfrequenz.**

(43) Veröffentlichungstag der Anmeldung :
**30.09.92 Patentblatt 92/40**

(45) Bekanntmachung des Hinweises auf die
Patenterteilung :
**20.07.94 Patentblatt 94/29**

(84) Benannte Vertragsstaaten :
**CH DE FR GB IT LI**

(56) Entgegenhaltungen :
**EP-A- 0 351 783**

(56) Entgegenhaltungen :
**EPE 1987, Seiten 647-652 ; NIERMEYER,
SCHRODER: 'New predictive control strategy
for pwm-inverters'
IPEC 1990, TOKYO Seiten 405-412 ; HINTZE,
SCHRODER: 'Four quadrant ac-motor drive
with a gto current source inverter with low
harmonics and on lineoptimized pulse patterns'**

(73) Patentinhaber : **SIEMENS
AKTIENGESELLSCHAFT
Wittelsbacherplatz 2
D-80333 München (DE)**

(72) Erfinder : **Amler, Gerald, Dipl.-Ing.
Herpersdorfer Strasse 22
W-8500 Nürnberg (DE)**

EP 0 505 591 B1

**Beschreibung**

Die Erfindung bezieht sich auf ein Verfahren zur Regelung eines zweidimensionalen Vektors einer Strecke mittels eines wertediskreten Stellgliedes mit begrenzter Schaltfrequenz und auf eine Schaltungsanordnung zur Durchführung des Verfahrens.

Wertediskrete Stellglieder besitzen nur endlich viele verschiedene Zustände, die am Ausgang eingestellt werden können. Soll ein Zwischenwert erzeugt werden, ist das näherungsweise möglich, wenn man zwischen benachbarten Zuständen hin- und herwechselt und so im zeitlichen Mittel den zu erzeugenden Wert approximiert. Die bei technischen Systemen im allgemeinen vorhandene Tiefpaßwirkung in der Regelstrecke glättet die erzeugte Wechselgröße.

Soll ein zweidimensionaler Vektor einer Strecke eingestellt werden, reicht es nicht aus, jede Dimension getrennt zu betrachten, da diese zum Teil voneinander abhängen. Daher bewirkt eine Änderung des Zustandes des Stellgliedes nicht nur an einem Ausgang eine Änderung.

Bisher verwendete Steuerverfahren gehen meist von einer eindimensionalen Betrachtungsweise aus. Die Abhängigkeiten der verschiedenen Ausgänge des Stellgliedes sowie dessen innere Zustände bleiben dabei unberücksichtigt.

Aus der Zeitschrift "Regelungstechnische Praxis", 24. Jahrgang, 1983, Heft 11, Seiten 472 bis 477, ist eine direkte Stromregelung bei Drehstromantrieben mit Pulswechselrichter bekannt. Eine in der gerätemäßigen Ausführung sehr einfache Lösung stellt die Zweipunktregelung dar. Eine derartige Regelung besteht aus drei mit hysteresebehafteten Zweipunktreglern. Diese Regler verursachen eine Zustandsänderung immer dann, wenn die Differenz zwischen Soll- und Istwert einen bestimmten Grenzwert übersteigen. Das System kann so einem sich ändernden Sollwert mit maximaler Geschwindigkeit folgen. Diesem Aufsatz ist zu entnehmen, daß dieser Reglertyp bei Spannungszwischenkreisumrichtern für die Regelung der Phasenströme eingesetzt wird. Da die sich ergebenden Phasenströme nicht voneinander unabhängig sind, ergeben sich nicht immer optimale Schaltzustände.

Durchläuft die Sollgröße periodisch eine bestimmte Funktion, so kann man sich im voraus geeignete, auf die Periode bezogene Schaltzeitpunkte berechnen. Dabei kann u.U. die Abhängigkeit mehrerer Phasen voneinander berücksichtigt werden. Der Nachteil dieses Verfahrens liegt darin, daß für jeden Betriebspunkt (Periodendauer und Aussteuerung) ein eigenes Pulsmuster berechnet werden muß. Jede Verschiebung des Betriebspunktes erfordert einen Übergang zwischen den Pulsmustern. Dieser Übergang kann teilweise sehr lange dauern, da nur zu bestimmten Zeiten innerhalb einer Periode das Pulsmuster gewechselt werden darf. Gleichzeitig entstehen während des dynamischen Vorganges Fehler, da das Pulsmuster nicht an seinem optimalen Punkt betrieben wird.

Ein eindimenionales Verfahren (Zweipunktregler mit Hysterese) kann auch auf den mehrdimensionalen Fall erweitert werden. Dazu gibt man statt der Hysteresebreite ein Hysteresegebiet um einen Sollwert vor. Sobald der Istwert das Gebiet verlassen will, wird auf einen anderen Zustand gewechselt, der ihn wieder in das Innere dieses Hysteresegebietes führt. Durch diese Vorgehensweise wird der Istwert immer in der Nähe des Sollwerts gehalten. Auch bei Änderungen des Sollwertes ist ein schnelles Folgen gewährleistet. Die Schaltfrequenz kann durch die Größe des Hysteresegebietes beeinflußt, aber nicht exakt vorgegeben werden.

Ein derartiges mehrdimensionales Verfahren ist beispielsweise als prädiktive Stromregelung aus der Zeitschrift "Messen-Steuern-Regeln", Nr.13, Juni 1989, Seiten 20 bis 23, bzw. aus "EPE", 1987, Seiten 647 bis 652, mit dem Titel "New Predictive Control Stategy for PWM-Inverters" bekannt. Ein weiteres Beispiel für eine prädiktive Stromregelung mit Optimierung in Echtzeit für einen Pulsumrichter ist aus "IPEC", Tokyo 1983, Seiten 1665 bis 1675, bekannt. Ein mehrdimensionales Verfahren für einen GTO-I-Umrichter ist aus dem Vortrag "Four Quadrant AC-Motor Drive With A GTO Current Source Inverter With Low Harmonics And On Line Optimized Pulse Pattern" von D.Hintze und D.Schröder, abgedruckt im Tagungsband "IPEC", Tokyo 1990, Seiten 405 bis 412, bekannt.

Durch dieses Verfahren kann zwar der Sollwert näherungsweise erreicht werden, doch er wird nicht einmal als zeitlicher Mittelwert eingestellt. Es kann vorkommen, daß sich die Trajektorie des Istwertes für längere Zeit in einem Teil des Hysteresegebietes aufhält. Dadurch ergibt sich ein Mittelwert, der nicht in jeder Richtung gleich dem Sollwert ist. Dieser Fehler muß durch einen weiteren Regler kompensiert werden. Besonders störend wirkt sich dieser Effekt bei großen Hysteresegebieten und daher kleinen Schaltfrequenzen aus.

Mittels eines mehrdimensionalen Verfahrens wird eine relativ niedrige Schaltfrequenz und eine gute Regeldynamik erreicht. Die Nachteile des Verfahrens mit vorausberechnetem Pulsmuster werden so vermieden. Allerdings kann damit auch die Schaltfrequenz nicht genau vorherbestimmt werden. Sie hängt vom jeweiligen Betriebspunkt ab und schwankt stark. Ein weiterer Nachteil dieses Verfahrens liegt darüber hinaus darin, daß beispielsweise zwar die Spannung geregelt wird, nicht aber das Integral über die Spannung, d.h. der Strom. Beispielsweise kann es vorkommen, daß der Mittelwert der Spannung nur in einer Richtung zu Null wird und somit der Strom in der dazu orthogonalen Richtung für längere Zeit erheblich vom Sollwert abweicht. Allein durch die Ansteuerung des Umrichters wird ein Fehler im Strom verursacht, der durch einen Regler, der auf das Hysteresegebiet wirkt, wieder ausgeglichen werden muß.

Der Erfindung liegt nun die Aufgabe zugrunde, ein Verfahren und eine Schaltungsanordnung zur Regelung eines zweidimensionalen Vektors einer Strecke mittels eines wertediskreten Stellgliedes mit begrenzter Schaltfrequenz anzugeben, wodurch die aufgeführten Nachteile vermieden werden.

Diese Aufgabe wird erfindungsgemäß mit den Merkmalen des Anspruchs 1 gelöst.

Bei diesem erfindungsgemäßen Verfahren wird zunächst ein Stellgrößen-Vektortripel ausgewählt, die benachbart zu einem Stellgrößen-Sollwert sind, der sich aus den die Sollwerten des zweidimensionalen Vektors einer Regelstrecke ergibt. Diese drei ausgewählten Stellgrößen-Istwerte sind nun während einer Schaltperiode in einer vorbestimmten Reihenfolge und mit vorbestimmten Verweilzeiten so abzuwechseln, daß der zeitliche Mittelwert des Ist-Vektors über einen Umlauf einer durch die Stellgrößen-Istwerte gebildete Soll-Trajektorie gleich seinem Sollwert ist. Dadurch ist die optimale Ortskurve für den Ist-Vektor bestimmt. Nun werden die Schaltzeitpunkte so bestimmt, daß der Ist-Vektor des Streckenausgangs in diese Ortskurve einläuft. Dies wird dadurch erreicht, wenn genau dann umgeschaltet wird, d.h. der nächste Vektor des ausgewählten Stellgrößen-Vektortripel angesteuert wird, wenn der Abstand zwischen dem Vektor des Streckenausgangs und dem nächsten Eckpunkt der Ortskurve (Trajektorie) minimal wird.

Mit dieser Vorgehensweise erhält man bei gegebener Schaltfrequenz eine minimale Abweichung vom Sollwert, wobei der zeitliche Mittelwert mit dem Sollwert übereinstimmt, und gleichzeitig eine kürzest mögliche Anregelzeit.

Bei der Anwendung dieses erfindungsgemäßen Verfahrens bei einem stromeinprägenden Umrichter mit abschaltbaren Tyhristoren (GTO-I-Umrichter), wobei Kondensatoren zwischen Umrichter und Maschine angeordnet sind, werden bei der Regelung die Kondensatorspannung und der Maschinenstrom berücksichtigt. Mit der Beschreibung dieser Größen als Vektoren findet eine zweidimensionale Optimierung (zweidimensionaler Vektor) statt. D.h., nicht nur der Vektor der Kondensatorspannung wird in der Nähe des Sollvektors gehalten, sondern auch dessen Mittelwert und damit wird der Maschinenstrom richtig eingestellt, wobei nur eine Variable (Schaltzeitpunkt) zur Verfügung steht.

Die Nebenbedingung, nämlich, daß der Maschinenstrom möglichst wenig vom Sollstrom abweichen soll, wird dadurch erreicht, wenn der Spannungsvektor entlang der berechneten Soll-Trajektorie verläuft und das Integral über eine Spannungs-Soll-Ist-Differenz über einen Umlauf zu Null wird.

Dieses Verfahren kann auch beim netzseitigen Stromrichter dieses stromeinprägenden GTO-I-Umrichters angewendet werden. Ebenso kann dieses Verfahren bei einem spannungseinprägenden Umrichter, auch Pulsumrichter genannt, angewendet werden.

Der Aufbau einer erfindungsgemäßen Schaltungsanordnung zur Durchführung des Verfahrens ist den Ansprüchen 18 und 19 zu entnehmen. Als Schaltungsanordnung ist ein Mikroprozessor vorgesehen, dem die Soll- und Istwerte der Vektoren zugeführt werden und der ausgangsseitig über einen Steuersatz mit den abschaltbaren Stromrichterventilen des diskreten Stellgliedes verbunden ist. Dieser Mikroprozessor arbeitet das erfindungsgemäße Verfahren ab, wobei als Ergebnis ein verbleibendes Zeitintervall zwischen der Abtastung und der ausführenden Schalthandlung und eine Nummer des nächsten Zustandes des Stellgliedes anstehen. Während der Steuersatz diese Zustandsänderung ausführt, rechnet der Mikroprozessor bereits schon die nächste Berechnung aus.

Einzelne Verfahrensschritte und vorteilhafte Ausgestaltungen des Verfahrens nach Anspruch 1 sind den Ansprüchen 3 bis 15 zu entnehmen.

Zur weiteren Erläuterung der Erfindung wird auf die Zeichnung Bezug genommen, in der ein Ausführungsbeispiel einer Schaltungsanordnung zur Durchführung des erfindungsgemäßen Verfahrens schematisch veranschaulicht ist.

| Figur 1 | zeigt eine Induktionsmaschine, die mittels eines stromeinprägenden Umrichters mit abschaltbaren Stromrichterventilen und nachgeschalteten Kondensatoren aus einem Netz gespeist wird, |
| Figur 2 | ist ein vereinfachtes einphasiges Ersatzschaltbild dieses Antriebs nach Figur 1 veranschaulicht, in den |
| Figuren 3 und 4 | sind Strompfade durch das wertediskrete Stellglied und der Maschine für jeweils einen Stromvektor dargestellt, die |
| Figur 5 | zeigt die Schaltmöglichkeiten und die Stromvektoren des maschinenseitigen Stromumrichters des Antriebs nach Figur 1, in |
| Figur 6 | ist ein vereinfachtes Blockschaltbild der Regelung des Antriebs nach Figur 1 dargestellt, in |
| Figur 7 | ist das erfindungsgemäße Verfahren mittels eines hardwaremäßigen Blockschaltbild |

schematisch veranschaulicht, die

| Figur 8 | zeigt ein Blockschaltbild eines Steuersatzes, in |
| Figur 9 | sind die möglichen Eingangsstromvektoren des wertediskreten Stellgliedes nach Figur 1 in einem Diagramm dargestellt, die |
| Figur 10 | zeigt in einem Diagramm einen Maschinenstrom mit seinen benachbarten Stellgrößen-Istwerten, die |
| Figur 11 | zeigt in einem Diagramm einen Spannungsvektor mit seinen Ableitungen, in der |
| Figur 12 | ist eine Soll-Trajektorie der Ständerspannung der Induktionsmaschine nach Figur 1 und in der |
| Figur 13 | ist eine Trajektorie des Maschinenstromes der umrichtergespeisten Maschine nach Figur 1 jeweils in einem Diagramm dargestellt, in |
| Figur 14 | ist das Einlaufen des Ständerspannungsvektors in eine Soll-Trajektorie veranschaulicht, in der |
| Figur 15 | sind die ausgewählten Stromvektoren bei einer erheblichen Abweichung des Maschinenstroms vom Sollwert und in der |
| Figur 16 | ist die zugehörige Bewegung des Spannungsvektors dargestellt, die |
| Figur 17 | zeigt einen Ständerstrom mit seinen benachbarten Stellgrößen-Istwerten, wobei der Ständerstrom außerhalb eines aufgespannten Sechsecks liegt und die |
| Figur 18 | zeigt den zugehörigen Spannungsvektor mit den Ableitungen, in |
| Figur 19 | ist die Projektion eines Vektors x bei beschränkter Vektorauswahl dargestellt, in den |
| Figuren 20 und 21 | sind jeweils in einem Diagramm verschiedene Umlaufrichtungen von Vektortripel dargestellt, die |
| Figur 22 | zeigt das Verhalten des Spannungsvektors bei Sollwertänderungen und die |
| Figur 23 | zeigt eine Spannungsortskurve bei kurzen Impulsen. |

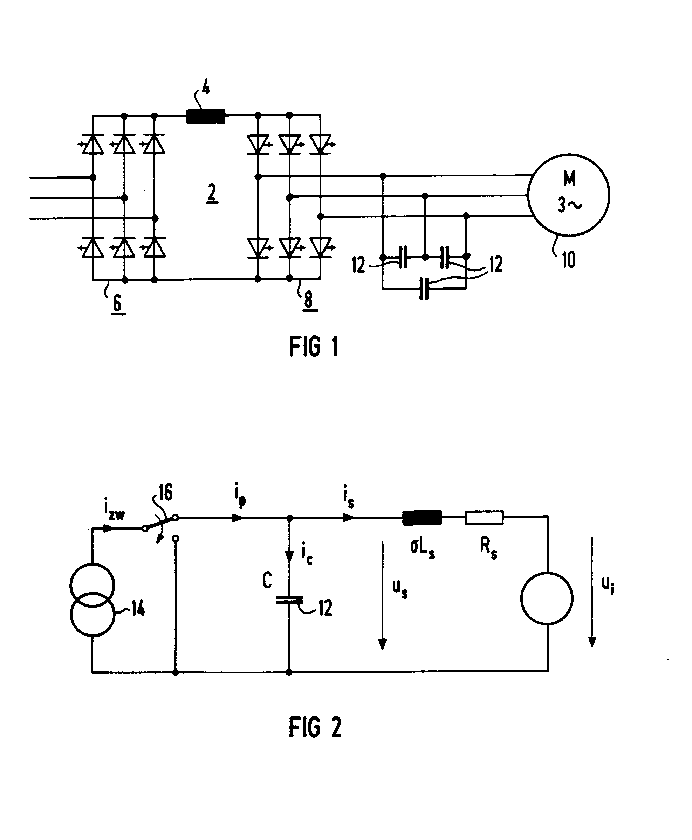

Ein Stromzwischenkreisumrichter 2, dargestellt in Figur 1, ist dadurch gekennzeichnet, daß ein über eine Drossel 4 annähernd eingeprägter Strom so auf zwei der drei Phasen geschaltet wird, daß sich stets ein geschlossener Kreis bildet. Der netzseitige Umrichter 6 und der maschinenseitige Umrichter 8 sind jeweils mit abschaltbaren Stromrichterventilen, insbesondere mit Gate-Turn-Off-Thyristoren (GTO-Thyristoren) aufgebaut. Der maschinenseitige Umrichter kann auch mit herkömmlichen Thyristoren bestückt werden. Durch diese abschaltbaren Stromrichterventile ist es möglich, den Strom auch direkt zu unterbrechen. Aufgrund der Induktivitäten der Maschine 10 bilden sich aber sehr hohe Spannungsspitzen aus, die zur Zerstörung des maschinenseitigen Umrichters 8 führen können. Durch eine einfache Beschaltung mit Kondensatoren 12 lassen sich diese Spannungsspitzen erheblich reduzieren. Dadurch entstehen allerdings einige weitere Effekte:

- Der Umrichterstrom $i_p$ fließt nicht mehr nur in die Maschine 10, sondern auch in die Kondensatoren 12, wodurch der direkte Eingriff auf die Maschinenströme verlorengeht.
- Die blockförmigen Ströme werden durch die Kondensatoren 12 geglättet, wodurch die Verluste in der Maschine geringer werden und die Drehmomentwelligkeit abnimmt.
- Die Kondensatoren 12 bilden mit der Streuinduktivität $\sigma L_S$ der Maschine 10 einen Schwingkreis, der nur durch die relativ kleinen Ständerwiderstand $R_S$ gedämpft wird. Dieser Schwingkreis wird jedoch durch jede Schalthandlung des Umrichters 8 angeregt.
- Durch die Kondensatoren 12 wird Blindleistung erzeugt, die in der Maschine 10 verbraucht wird. Bei einer bestimmten Frequenz wird der Blindleistungsbedarf der Maschine 10 vollständig durch die Kondensatoren 12 gedeckt (Selbsterregung), wodurch das System Maschine 10 - Kondensatoren 12 im Leerlauf an diesem Punkt keinen Strom $i_s$ mehr vom Umrichter 8 aufnimmt.
- Da der Strom $i_s$ in der Maschine 10 nicht mehr eingeprägt ist, muß für die Regelung die Ständerdifferentialgleichung mit berücksichtigt werden.
- Mit den Kondensatoren 12 bzw. den Kondensatorspannungen $u_s$ (Ständerspannungen) ergeben sich weitere Differentialgleichungen, die in die Regelung mit einbezogen werden müssen, wodurch die Ordnung des Differentialgleichungssystems um den Grad 2 erhöht wird.

Bezieht man die Ständerströme $i_s$ und -spannungen $u_s$ in die Regelung mit ein, so dürfte der Schwingkreis kein Problem darstellen, wenn die Regelung hinreichend schnell ist. Wichtig ist nur, daß die Schaltfrequenz $f_s$ des Umrichters 8 höher als die Eigenfrequenz des Schwingkreises ist, um einen ausreichenden Eingriff auf die Regelstrecke 10, 12 zu besitzen. Auch die Abtastfrequenz muß genügend hoch sein.

In Figur 2 ist das einphasige Ersatzschaltbild mit komplexen Größen des Antriebs nach Figur 1 dargestellt. Der netzseitige Umrichter 6 mit dem Zwischenkreis wurde hier auf eine einfache Stromquelle 14 reduziert und der maschinenseitige Umrichter 8 durch einen Schalter 16 symbolisiert, der aus der skalaren Größe des Zwischenkreisstromes $i_{zw}$ den in der räumlichen Ebene liegenden komplexen Vektor $i_p$ erzeugt. Da der Zwischenkreisstrom $i_{zw}$ wegen der Zwischenkreisinduktivität 4 eine stetige Größe ist, muß der Umrichter 8 so gesteuert werden, daß sich stets ein geschlossener und eindeutiger Strompfad durch Umrichter 8 und Maschine 10 ergibt. Folglich muß immer ein Schalter in der Brücke des maschinenseitigen Stromrichters 8 oben und einer unten geschlossen sein. Sind mehr als zwei Schalter geschlossen, ist kein definierbarer Zustand erreichbar. Somit gibt es neun Schaltmöglichkeiten. Davon sind sechs reguläre Vektoren und drei Schaltmöglichkeiten Nullvektoren bzw. Brückenkurzschlüsse.

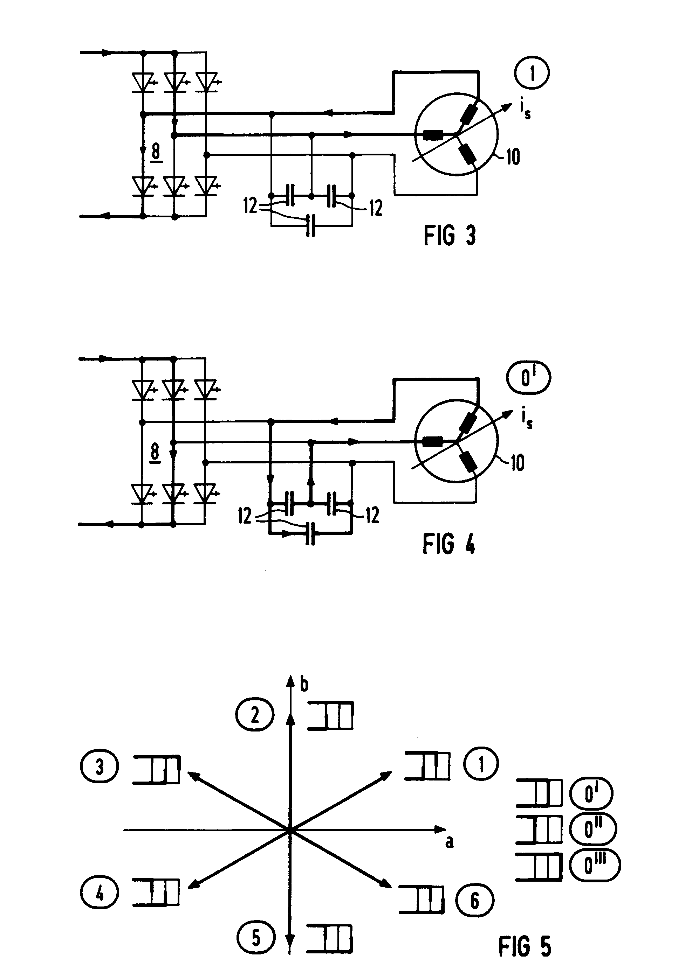

In Figur 3 ist ein Strompfad durch den Umrichter 8 und die Maschine 10 für eine Schaltkombination, hier als Vektor 1 bezeichnet, angegeben. Nimmt man an, daß der Strom eine ausreichend lange Zeit auf diesem Weg geflossen ist, so ist der Einschwingvorgang beendet und der Zwischenkreisstrom $i_{zw}$ fließt nur noch durch die Maschine 10 und nicht mehr über die Kondensatoren 12. Wegen der räumlichen Anordnung der Maschinenwicklungen kann man dem Maschinenstrom $i_s$ eine eindeutige Richtung im Raum zuordnen.

Wird nun von diesem Zustand aus in der unteren Brückenhälfte vom linken auf das mittlere Stromrichterventil gewechselt, hier als Vektor $O^l$ bezeichnet, fließt der Zwischenkreisstrom $i_{zw}$ an der Maschine 10 vorbei (Brückenkurzschluß). Der Maschinenstrom $i_s$ bleibt im ersten Moment erhalten und findet über die Kondensatoren 12 einen geschlossenen Pfad (Figur 4).

Die Figur 5 zeigt die Richtungen der Stromvektoren für die verschiedenen Schaltkombinationen sowie die Strompfade der drei möglichen Brückenkurzschlüsse. Dabei sind die stromführenden Zweige der Brücke des Umrichters 8 jeweils durch einen dick ausgezeichneten Strich veranschaulicht. Die Länge der Vektoren wird durch die Höhe des Zwischenkreisstromes $i_{zw}$ bestimmt, während die Richtung durch die gezündeten Stromrichterventile des Umrichters 8 festgelegt ist.

Wie eingangs schon erwähnt, kann das Verfahren zur Regelung eines zweidimensionalen Vektors einer Strecke mittels eines wertediskreten Stellgliedes auch bei einem spannungseinprägenden Umrichter, auch Pulsumrichter genannt, angewendet werden.

Als netzseitiger Umrichter kann der Pulsumrichter eine Diodenbrücke oder einen selbstgeführten Umrichter aufweisen. Der maschinenseitige Umrichter ist ein selbstgeführter Umrichter mit Freilaufdioden. Als Zwischenkreis ist ein Elektrolytkondensator vorgesehen. Das zugehörige einphasige Ersatzschaltbild würde dem Ersatzschaltbild der Figur 2 ähneln. Anstelle der Stromquelle 14 wäre eine Spannungsquelle mit einer nachgeschalteten Reihenschaltung, bestehend aus einem Netzwiderstand und einer Netzinduktivität, vorgesehen. Der Schalter 16 im Ersatzschaltbild des Pulsumrichters ist nur ein Schalter zum Öffnen und Schließen und nicht zum Umschalten. Außerdem wäre noch ein zweiter Schalter vorhanden, der vor der Reihenschaltung, bestehend aus Streuinduktivität und Ständerwiderstand, angeordnet wäre.

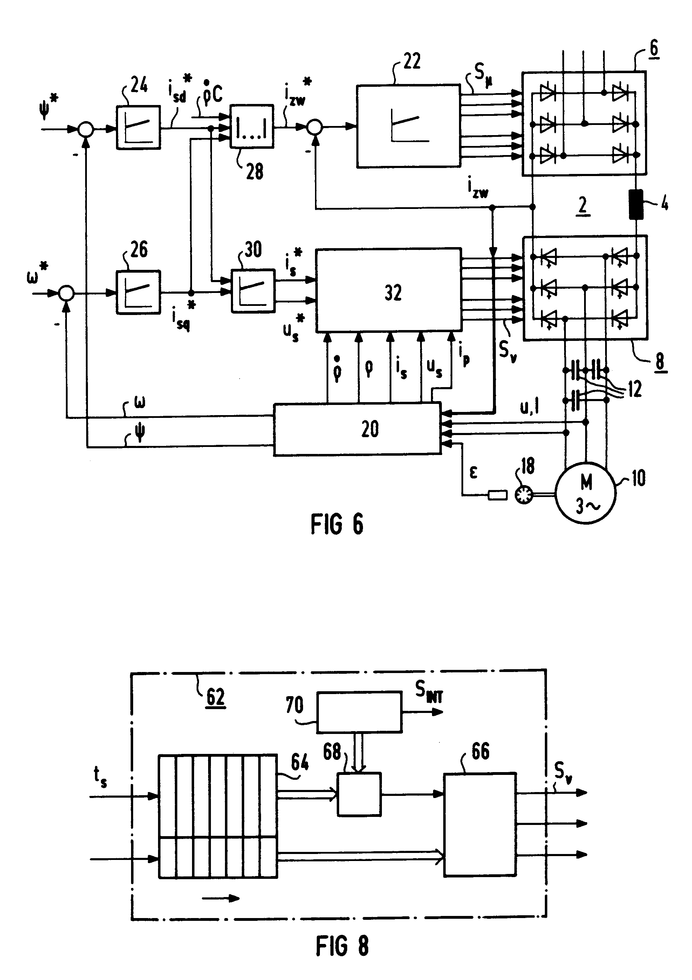

In Figur 6 ist der in Figur 1 dargestellte Antrieb mit einer Regel- und Steuereinrichtung, die als ein vereinfachtes Blockschaltbild dargestellt ist, veranschaulicht. Als Stromrichterventile der Umrichter 6 und 8 sind abschaltbare Halbleiterventile vorgesehen, insbesondere bei hohen Leistungen abschaltbare Thyristoren, sogenannte Gate-Turn-Off-Thyristoren (GTO-Thyristoren). Wenn als Stromrichterventile GTO-Thyristoren verwendet werden, so ist dieser Stromzwischenkreisumrichter 2 auch als GTO-I-Umrichter bekannt. Der lastseitige Stromrichter 8 (wertediskretes Stellglied), auch Wechselrichter genannt, ist ausgangsseitig zunächst mit den Kondensatoren 12 versehen und speist die Maschine 10, die mit einem Drehzahlgeber 18 versehen sein kann.

Die Regel- und Steuereinrichtung arbeitet mit einem Strommodell 20 und dem Drehzahlgeber 18. Natürlich kann auch eine geberlose Regelung mit einem Spannungsmodell vorgesehen werden, wobei dann aber ein geregelter Betrieb bei kleinen Drehzahlen (kleiner als 5 Hz) nicht möglich ist. Die Regelung des netzseitigen Stromrichters 6 ist im Zusammenhang mit dem erfindungsgemäßen Verfahren von untergeordneter Bedeutung. Sie ist in einem Block "Gleichrichterregelung" zusammengefaßt, der mit dem Bezugszeichen 22 versehen ist. Außerdem enthält die Regel- und Steuereinrichtung einen Flußregler 24, einen Drehzahlregler 26, einen Betragsbildner 28, einen Stromregler 30 und eine Schaltungsanordnung 32 zur Durchführung des erfindungsgemäßen Verfahrens.

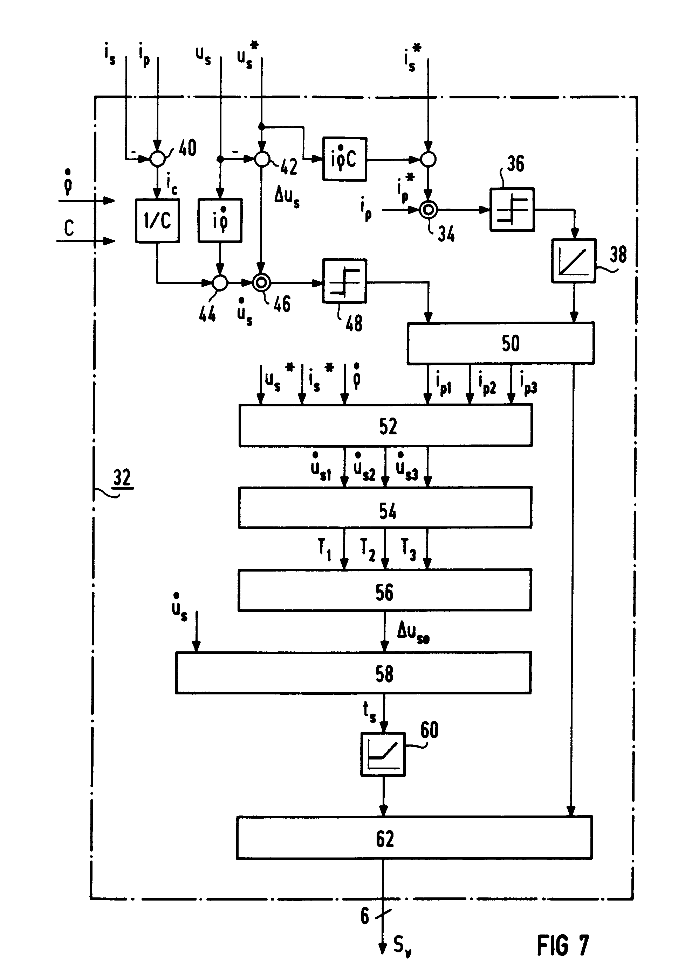

Das Strommodell 20 erzeugt aus den Zustands-Istwerten u und i der Maschine 10 und einer ermittelten Rotorlage $\varepsilon$ einerseits einen Drehzahl-Istwert $\omega$ und einen Fluß-Istwert $\psi$ und andererseits die Zustands-Vektoren $u_s$ und $i_s$, den Winkel $\rho$ des Flusses $\psi$ und dessen Winkelgeschwindigkeit $\dot{\rho}$. Zur Ermittlung der Ableitungen des Ständerstromvektors $\dot{u}_s$ wird außerdem der Umrichterstrom $i_p$ des lastseitigen Stromrichters 8 benötigt, der mittels der Schaltzustände $S_v$ und des Zwischenkreisstromes $i_{zw}$ gebildet wird. Der Flußregler 24 erzeugt aus einem Vergleich des Fluß-Sollwertes $\psi^*$ und des Fluß-Istwertes $\psi$ einen feldorientierten Stromkomponenten-Sollwert $i_{sd}^*$ eines Strombetrags $i_{zw}$. Der Drehzahlregler 26 generiert aus einem Vergleich eines Drehzahl-Sollwertes $\omega^*$ mit dem Drehzahl-Istwert $\omega$ einen feldorientierten Stromkomponenten-Sollwert $i_{sq}^*$. Der Betragsbildner 28 ermittelt aus den beiden feldorientierten Stromkomponenten-Sollwerten $i_{sd}^*$ und $i_{sq}^*$ und der mit einem Faktor C multiplizierten Winkelgeschwindigkeit $\dot{\rho}$ des Flusses $\psi$ Betrag $i_{zw}^*$ des Stromzwischenkreis-Sollwertes $i_{zw}^*$, der mittels der Gleichrichterregelung 22 in Steuersignale $S_\mu$ für den netzseitigen Stromrichter 6 gewandelt wird. Die feldorientierten Stromkomponenten-Sollwert $i_{sd}^*$ und $i_{sq}^*$ werden außerdem dem Stromregler 30 zugeführt, an dessen Ausgängen die Sollwerte $u_s^*$ und $i_s^*$ der Vektoren $u_s$, $i_s$ der Strecke 10, 12 anstehen. Die Schaltungsanordnung 32 zur Durchführung des erfindungsgemäßen Verfahrens, insbesondere ein Mikroprozessor, erzeugt aus diesen Sollwerten $u_s^*$, $i_s^*$ und den mittels des Strommodells 20 generierten Istwerten $\rho$, $\dot{\rho}$, $i_s$, $u_s$ und $i_p$ die Steuer- bzw. Schaltsignale S (Schaltzustände) für den maschinenseitigen Stromrichter 8. Die Schaltungsanordnung 32 ist zum besseren Verständnis als hardwaremäßiges Blockschaltbild in der Figur 7 näher dargestellt.

Anhand des Blockschaltbildes der Schaltungsanordnung 32 nach Figur 7 und des einphasigen Ersatzschaltbildes des Stromzwischenkreisumrichters 2 mit nachgeschalteten Kondensatoren 12 und der Maschine 10 nach Figur 2 soll nun das erfindungsgemäße Verfahren näher erläutert werden, wobei immer wieder auf die Anwendung des Verfahrens bei einem U-Umrichter (Pulsumrichter) eingegangen wird:

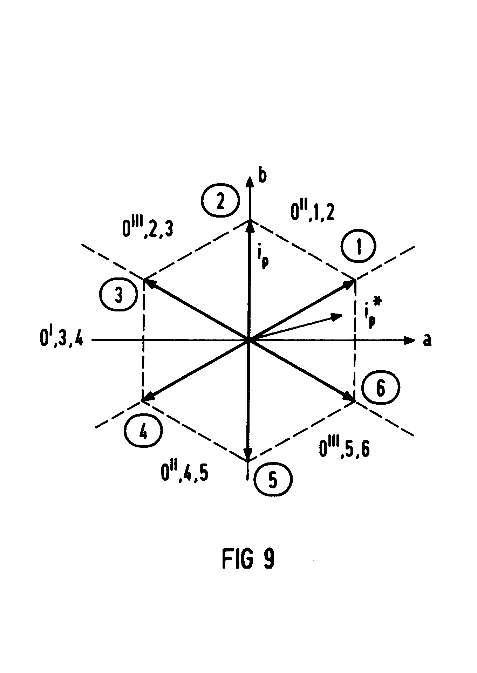

Für die zweidimensionale Optimierung (Spannung mit Nebenbedingung Strom) steht nur eine Variable (Schaltzeitpunkt) zur Verfügung. Prinzipiell stehen sechs Stromvektoren $i_{p1}$ bis $i_{p6}$, sowie drei Nullvektoren $i_{p0}$I bis $i_{p0}$III zur Verfügung. Diese Stromvektoren $i_{l1}$ bis $i_{p0}$III sind in der Figur 9 in einem rechtwinkligen ständerfesten Koordinatensystem näher dargestellt. In der Figur 5 sind die dazu möglichen Schaltmöglichkeiten des maschinenseitigen Stellgliedes 8 veranschaulicht.

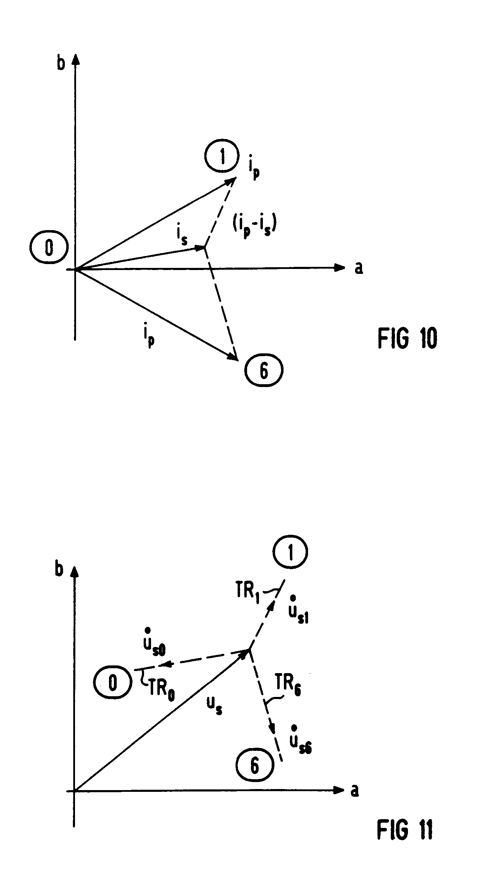

Es sei angenommen, daß der Ständerstromzeiger $i_s$, wie in der Figur 10 dargestellt, in einem Sektor liegt, der durch die Stromzeiger $i_{p6}$, $i_{p1}$ und $i_{p0}$ aufgespannt wird. Jeder dieser drei Stromzeiger $i_{p6}$, $i_{p1}$ und $i_{p0}$ verursacht eine Bewegung (zeitliche Veränderung) $\dot{u}_{s1}$, $\dot{u}_{s0}$ und $\dot{u}_{s6}$ vom Spannungszeiger $u_s$. Diese zeitliche Änderung des Spannungszeigers $u_s$ ist proportional zur Abweichung $i_{p1}$-$i_s$, $i_{p0}$-$i_s$ und $i_{p6}$-$i_s$ vom Stromzeiger $i_s$. Die möglichen Trajektorien $TR_1$, $TR_6$ und $TR_6$ sind in der Figur 11 als unterbrochene Linien dargestellt, die jeweils von der Spitze des Spannungszeigers $u_s$ durch die Auswahl der drei benachbarten Stromzeiger $i_{p6}$, $i_{p1}$ und $i_{p0}$ verursacht werden. Da jeder der drei Vektoren $i_{p1}$, $i_{p6}$ und $i_{p0}$ eine Bewegung vom Spannungsvektor $u_s$ verursacht, kann auf Dauer nicht erreicht werden, daß der Spannungsvektor $u_s$ (Istwert) gleich dem Sollwert $u_s^*$ ist. Es ist auch nicht notwendig, die Gleichheit zu erreichen, auch nicht zu bestimmten Zeitpunkten. Wichtiger ist eine Minimierung der Oberschwingungen. Damit die Oberschwingungen minimal werden, muß der Spannungszeiger $u_s$ möglichst nahe bei einem Sollwert $u_s^*$ gehalten werden, wobei dieser Sollwert $u_s^*$ nicht erreicht werden muß.

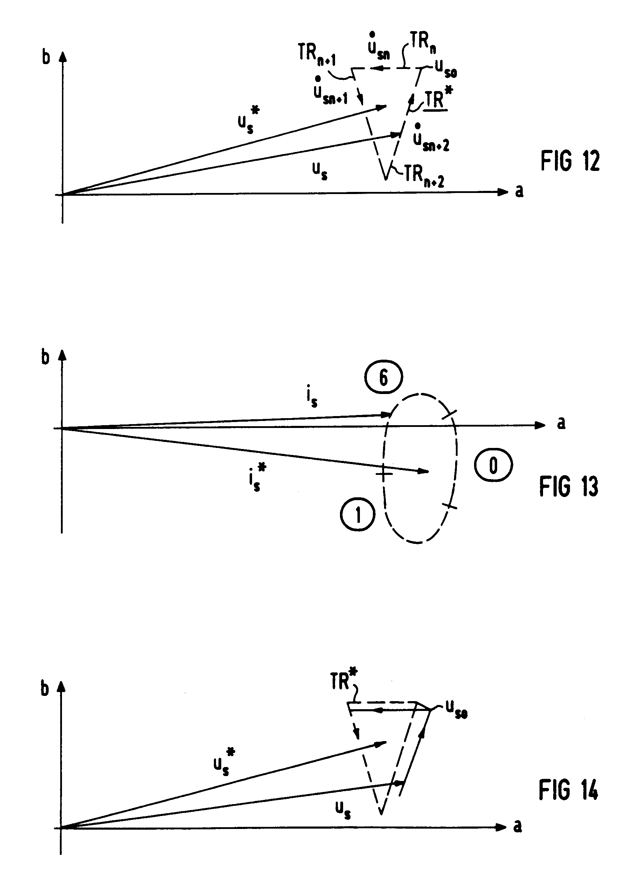

Die Soll-Trajektorie TR* des Spannungszeigers $u_s$ mit der kleinsten Abweichung bei gegebener Schaltfrequenz $f_s$ des Stellgliedes 8 ist ein Dreieck, das sich aus den Trajektorien $TR_n$, $TR_{n+1}$ und $TR_{n+2}$ für drei mögliche Stromvektoren $i_{pn}$, $i_{pn+1}$ und $i_{pn+2}$ zusammensetzt, wobei das Vektortripel $i_{pn}$, $i_{pn+1}$ und $i_{pn+2}$ benachbarte Zeiger eines Umrichter-Strom-Sollzeigers $i_p^*$ ist. Diese Soll-Trajektorie TR* des Spannungsvektors $u_s$ ist in der Figur 12 in einem rechtwinkligen ständerorientierten Koordinatensystem dargestellt. Die Reihenfolge der Stromvektoren und damit der Umlaufsinn sollte stets beibehalten werden und nicht, wie bei einer bekannten Vektormodulation bei einem spannungseinprägenden Pulsumrichter meist üblich, nach jeder Periode geändert werden. Dafür gilt auch zu keinem Zeitpunkt $u_s$=$u_s^*$. Für dieses Dreieck sind bei stromeinprägenden Umrichtern nur drei Kommutierungen notwendig, beim spannungseinprägenden Umrichter dagegen vier. Als Nebenbedingung ist noch zu fordern, daß der Strom $i_s$ möglichst wenig vom Sollstrom $i_s^*$ abweicht. Bei einem Verlauf der Spannung $u_s$ gemäß der Figur 12 stellt sich als Trajektorie des Stromes $i_s$ eine geschlossene Kurve ein, dargestellt in der Figur 13, wenn das Integral über die Spannungs-Soll-Ist-Differenz über einen Umlauf zu Null wird.

Für die Berechnung eines Schaltzeitpunktes werden folgende Annahmen getroffen:
- Es stehen drei mögliche, unterschiedliche Stromvektoren $i_{pn}$, $i_{pn+1}$ und $i_{pn+2}$ in jedem Augenblick zur Verfügung,
- $i_s$ ist während eines Schaltspieles konstant,
- $i_s^*$, $u_s^*$ = konstant,
- $\omega$ = Null.

Treffen die letzten zwei Annahmen nicht zu, führt das Verfahren, wie noch gezeigt wird, dennoch zu guten Ergebnissen, da die Schaltzeitpunkte laufend berechnet werden und noch nicht ausgeführte Schalthandlungen korrigiert werden können. Das Verfahren paßt sich veränderten Eingangsgrößen sehr schnell an.

Wie aus dem letzten Abschnitt hervorgeht, lauten die Forderungen:
a) Die Trajektorie von $u_s$ ("Dreieck") ist in sich geschlossen,
b) die Größe des Dreiecks ist begrenzt und vorgebbar,
c) die Trajektorie $i_s$ ("Ei") ist ebenfalls in sich geschlossen.

Wird anstelle des GTO-I-Umrichters 2 ein spannungseinprägender Umrichter verwendet, so lauten die Forderungen folgendermaßen:
aa) Die Trajektorie von $i_s$ ("Dreieck") ist in sich geschlossen,

bb) die Größe des Dreiecks ist begrenzt und vorgebbar,
cc) die Trajektorie $u_s$ ("Ei") ist ebenfalls in sich geschlossen.

Seien $T_n$, $T_{n+1}$ und $T_{n+2}$ die Verweildauern der einzelnen Vektoren $i_{pn}$, $i_{pn+1}$ und $i_{pn+2}$ bzw. $u_{pn}$, $u_{pn+1}$, $u_{pn+2}$ und $\dot{u}_{sn}$, $\dot{u}_{sn+1}$ und $\dot{u}_{sn+2}$ bzw. $\dot{i}_{sn}$, $\dot{i}_{sn+1}$, $\dot{i}_{sn+2}$ die Gradienten der Ständerspannung $u_s$ bzw. Ständerstrom $i_s$ für die verschiedenen Vektoren $i_p$ bzw. $u_p$, so ergibt sich auf den obigen Forderungen

$$\int_{T_{ges}} \dot{u}_s \, dt = 0 \qquad \text{( Forderung a) )} \qquad (1)$$

$$T_n + T_{n+1} + T_{n+2} = T_{ges} \qquad \text{(Forderung b))} \quad (2)$$

$$\int_{T_{ges}} ( u_s - u_s^{\cdot} ) \, dt = 0 \qquad \text{( Forderung c) )} \qquad (3)$$

bzw.

$$\int_{T_{ges}} \dot{i}_s \, dt = 0 \qquad \text{(Forderung a a) )} \qquad (1.1)$$

$$T_n + T_{n+1} + T_{n+2} + T_{ges} \qquad \text{(Forderung bb))} \quad (2.2)$$

$$\int_{T_{ges}} ( i_s - i_s^{\cdot} ) \, dt = 0 \qquad \text{(Forderung cc))} \qquad (3.3)$$

Mit der Annahme $i_s$ = konstant bzw. $u_s$ = konstant im Intervall $T_{ges}$ (Schaltperiode) erhält man aus (1) und (2) bzw. (1.1) und (2.2) ein Gleichungssystem dritter Ordnung:

$$\begin{bmatrix} \dot{u}_{sn} & \dot{u}_{sn+1} & \dot{u}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix} \qquad (4)$$

bzw.

$$\begin{bmatrix} \dot{i}_{sn} & \dot{i}_{sn+1} & \dot{i}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix} \qquad (4.4)$$

Form und Größe des Dreiecks liegen durch dieses Gleichungssystem fest. Nur die Lage ist noch unbestimmt. Wenn man einen Eckpunkt des Dreiecks mit $u_{so}$ bzw. $i_{so}$ bezeichnet, siehe Figur 12, gilt für den Spannungsvektor $u_s$ bzw. Stromvektor $i_s$ während einer Schaltperiode $T_{ges}$:

$$u_s(t) = \begin{cases} u_{so} + \dot{u}_{sn} t & t_o \leq t < t_o + T_n \\ u_{so} + \dot{u}_{sn} T_n + \dot{u}_{sn+1} (t - T_n) & t_o + T_n \leq t < t_o + T_n + T_{n+1} \\ u_{so} + \dot{u}_{sn} T_n + \dot{u}_{sn+1} T_{n+1} + \dot{u}_{sn+2} (t - T_n - T_{n+1}) & t_o + T_n + T_{n+1} \leq t < t_o + T_{ges} \end{cases} \qquad (5)$$

7

bzw.

$$i_s(t) = \begin{cases} i_{so} + \dot{i}_{sn} t & t_o \leq t < t_o + T_n \quad (5.5) \\ i_{so} + \dot{i}_{sn} T_n + \dot{i}_{sn+1}(t-T_n) & t_o + T_n \leq t < t_o + T_n + T_{n+1} \\ i_{so} + \dot{i}_{sn} T_n + \dot{i}_{sn+1} T_{n+1} + \dot{i}_{sn+2}(t-T_n-T_{n+1}) & t_o + T_n + T_{n+1} \leq t < t_o + T_{ges} \end{cases}$$

Setzt man Gleichung (5) bzw. (5.5) in Gleichung (3) bzw. (3.3) ein, ergibt sich durch die Integration die folgende Gleichung, die nach dem gesuchten Eckpunkt $u_{so}$ bzw. $i_{so}$ aufgelöst ist.

$$(u_{so} - u^*_{s}{}_{ges} + \dot{u}_{sn}(\frac{T_n^2}{2} + T_n T_{n+1} + T_n T_{n+2}) + \dot{u}_{sn+1}(\frac{T_{n+1}^2}{2} + T_{n+1} T_{n+2}) + \dot{u}_{sn+2}\frac{T_{n+2}^2}{2} = 0 \quad (6)$$

$$(i_{so} - i^*_{s})T_{ges} + \dot{i}_{sn}(\frac{T_n^2}{2} + T_n T_{n+1} + T_n T_{n+2}) + \dot{i}_{sn+1}(\frac{T_{n+1}^2}{2} + T_{n+1} T_{n+2}) + \dot{i}_{sn+2}\frac{T_{n+2}^2}{2} = 0 \quad (6.6)$$

Dabei wurde angenommen, daß sich der Sollwert $u^*_s$ des Spannungszeigers bzw. der Sollwert $i^*_s$ des Stromzeigers beim Pulsumrichter während der Schaltperiode $T_{ges}$ nicht verändert. Sollte es doch der Fall sein und man kennt die Ableitung $\dot{u}^*_s$, muß man $\dot{u}_s$ durch $(\dot{u}_s-\dot{u}^*_s)$ ersetzen.

Nun liegt im allgemeinen der Spannungszeiger $u_s$ bzw. der Stromzeiger $i_s$ nicht auf der so berechneten Soll-Trajektorie TR*, sondern meist ein Stück daneben. Durch ein geeignetes Verfahren wird der Spannungs- vektor $u_s$ bzw. Stromzeiger $i_s$ dazu gebracht, in diesen optimalen Zyklus (Soll-Trajektorie TR*) einzulaufen.

Man erreicht das, indem man die Schaltzeitpunkte so wählt, daß der Abstand zwischen dem Spannungs- vektor $u_s$ bzw. Stromvektor $i_s$ und dem nähstgelegenen Eckpunkt $u_{so}$ bzw. $i_{so}$ zum Schaltzeitpunkt minimal wird. Es gilt:

$$\left| u_s(t) - u_{so} \right|^2 \Big|_{t=t_s} = \min \quad (7)$$

bzw.

$$\left| i_s(t) - i_{so} \right|^2 \Big|_{t=t_s} = \min \quad (7.7)$$

Zur Lösung der Gleichung (7) bzw. (7.7) nähert man den zeitlichen Verlauf der Ständerspannung $u_s$ bzw. des Ständerstromes $i_s$ durch eine Taylor-Reihe für den momentanen Zeitpunkt $t_o$ und vernachlässigt dabei die Therme höherer Ordnung. Die Ableitung der Spannung ist aus der Kondensatorgleichung

$$\dot{u}_s = 1/C(i_p - i_s)$$

bekannt. Während beim U-Umrichter die Ableitung des Stromes aus der Ständergleichung

$$\dot{i}_s = \frac{1}{\sigma L_s}(u_s - R_s i_s - u_i)$$

bekannt ist. Mit den orthogonalen Komponenten der Ständerspannung $u_{s1}$ und $u_{s2}$ bzw. Ständerstrom $i_{s1}$ und $i_{s2}$ läßt sich nun die Betragsbildung in Gleichung (7) bzw. (7.7) auflösen. Das Minimum liegt dann an der Stelle, an der sich die Ableitung zu Null ergibt. Man erhält schließlich eine Gleichung erster Ordnung mit der Lösung:

$$(t_s - t_o) = \frac{\dot{u}_{s1}(u_{so1} - u_{s1}(t_o)) + \dot{u}_{s2}(u_{so2} - u_{s2}(t_o))}{\dot{u}_{s1}^2 + \dot{u}_{s2}^2} \quad (8)$$

bzw.

$$(t_s - t_o) = \frac{\dot{i}_{s1}(i_{so1} - i_{s1}(t_o)) + \dot{i}_{s2}(i_{so2} - i_{s2}(t_o))}{\dot{i}_{s1}^2 + \dot{i}_{s2}^2} \quad (8.8)$$

und damit die Zeitdifferenz, die bis zum nächsten Umschaltzeitpunkt bleibt. In Figur 14 ist das Einlaufen des Spannungszeigers $u_s$ in die Soll-Trajektorie TR* in einem Diagramm dargestellt.

Ist $\omega \neq 0$, verformt sich fortwährend die Soll-Trajektorie TR*, wobei die Trajektorienabschnitte natürlich keine Geradenstücke mehr sind. Da aber die Trajektorie laufend neu berechnet wird und es dabei nur auf den Eckpunkt des Dreiecks bei $u_{s0}$ ankommt, ergeben sich dadurch keine Probleme. Erst wenn die Schaltfrequenz $f_s$ im Verhältnis zur Drehzahl $\omega$ klein wird, entstehen geringe Abweichungen.

Auch durch die Bewegung des Stromvektors $i_s$ beim GTO-I-Umrichter aufgrund der Schalthandlungen (Oberschwingungen) kommt es zu Abweichungen des Spannungsvektors $u_s$ von den Geradenstücken $TR_n$, $TR_{n+1}$ und $TR_{n+2}$. Dieser Effekt kann dadurch umgangen werden, daß zur Berechnung der Ableitungen $\dot{u}_{sn}$, $\dot{u}_{sn+1}$ und $\dot{u}_{sn+2}$ nicht die Stromistwerte, sondern die -Sollwerte (entsprechend dem zeitlichen Mittel des Stromes) verwendet werden.

Man erreicht so nicht nur eine von Oberschwingungen unabhängige Schaltzeitpunktberechnung, sondern auch ein $PT_1$-ähnliches Verhalten für den Strom, ohne daß ein externer Regler dafür vorhanden wäre.

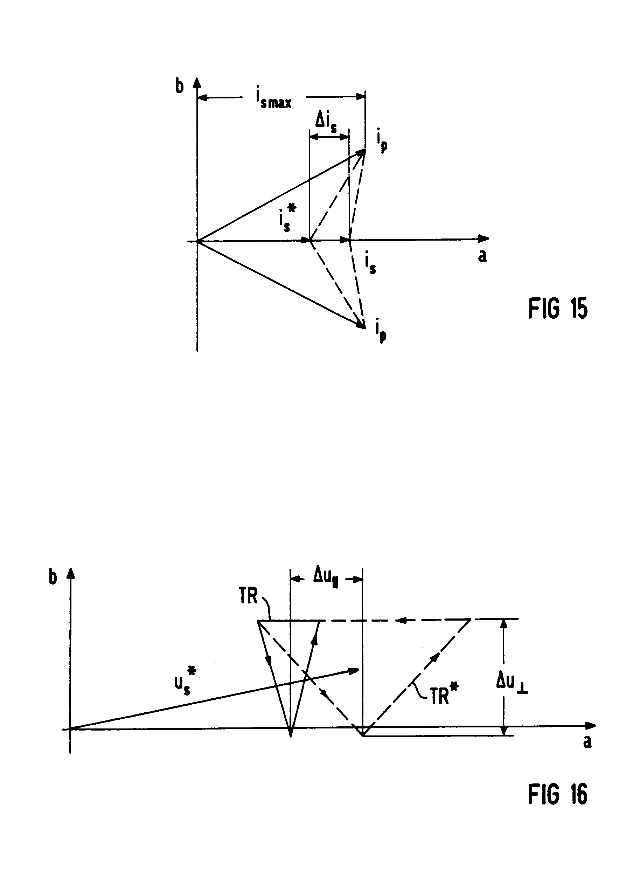

In Figur 15 ist ein Fall dargestellt, wobei der Stromistvektor $i_s$ erheblich vom Sollwert $i_s^*$ abweicht. Durch die Verwendung des Soll-Vektors wird eine Soll-Trajektorie TR* für den Spannungszeiger $u_s$ berechnet, die nicht vom Spannungsvektor $u_s$ durchlaufen werden kann (dargestellt in Figur 16). Aufgrund der Schaltbedingung liegt der Mittelpunkt der wahren Trajektorie TR gemäß Figur 16 so vom Sollwert $u_s^*$ versetzt, daß eine Spannungs-Zeitfläche $\Delta u_\parallel$ entsteht, die den Strom $i_s$ in Richtung des Sollstromes $i_s^*$ treibt.

Zur Abschätzung des zeitlichen Verhaltens ergibt sich aus geometrischen Überlegungen und mit den Bezeichnungen aus den Figuren 15 und 16:

$$\frac{\Delta u_\parallel}{\Delta u_\perp} \approx \frac{\Delta i_s \sqrt{3}}{i_{smax}} \qquad (9)$$

Aus der Ständerdifferentialgleichung erhält man näherungsweise:

$$\Delta u_\parallel = \sigma L_s \Delta \dot{i}_s \quad (10)$$

und somit eingesetzt

$$\Delta \dot{i}_s = -k \Delta i_s \quad (11)$$

mit

$$k = \frac{\Delta u_\perp \sqrt{3}}{\sigma L_s \, i_{s,max}} \qquad (12)$$

Die Gleichung (11) beschreibt eine Differentialgleichung erster Ordnung mit einem negativen, rein reellen Pol ($PT_1$-Verhalten).

Ein eigener Regler für den Strom ist also nur notwendig, um stationäre Störungen auszuregeln, z.B. bei falsch eingestellten Parametern bzw. um die Dynamik zu verbessern.

Im wesentlichen sind drei Gleichungen zu lösen:
- Gleichung (4) bzw. (4.4), um die anteiligen Zeiten der drei Vektoren zu ermitteln,
- Gleichung (6) bzw. (6.6), für den Eckpunkt der Soll-Trajektorie TR*,
- Gleichung (8) bzw. (8.8), die die verbleibende Zeit $t_s$ bis zum Umschaltpunkt wiedergibt.

Alle drei Gleichungen (4), (6) und (8) bzw. (4.4), (6.6) und (8.8) sind rein mathematisch lösbar. Doch es ist als Nebenbedingung zu fordern, daß alle Zeitintervalle positiv sind.

$$(t_s - t_o), T_n, T_{n+1}, T_{n+2} > 0.$$

Sollte die Gleichung (8) bzw. (8.8) eine negative Lösung erzeugen, ist der optimale Schaltzeitpunkt schon vorbei. Dies kann z.B. durch Sollwertänderungen vorkommen. Ein sofortiges Umschalten ist dann noch die beste Lösung.

Die Gleichung (6) bzw. (6.6) liefert immer eine sinnvolle Lösung, wenn die Zeitintervalle $T_n$, $T_{n+1}$, $T_{n+2}$ positiv sind. Daß sie alle positiv sind, ist nicht immer gesichert. Ist beispielsweise der Zwischenkreisstrom $i_{zw}$ zu klein, liegt der Ständerstromvektor $i_s$ nicht mehr in dem von den möglichen Vektoren $i_{p1}$, $i_{p0}$ und $i_{p6}$ aufgespann-

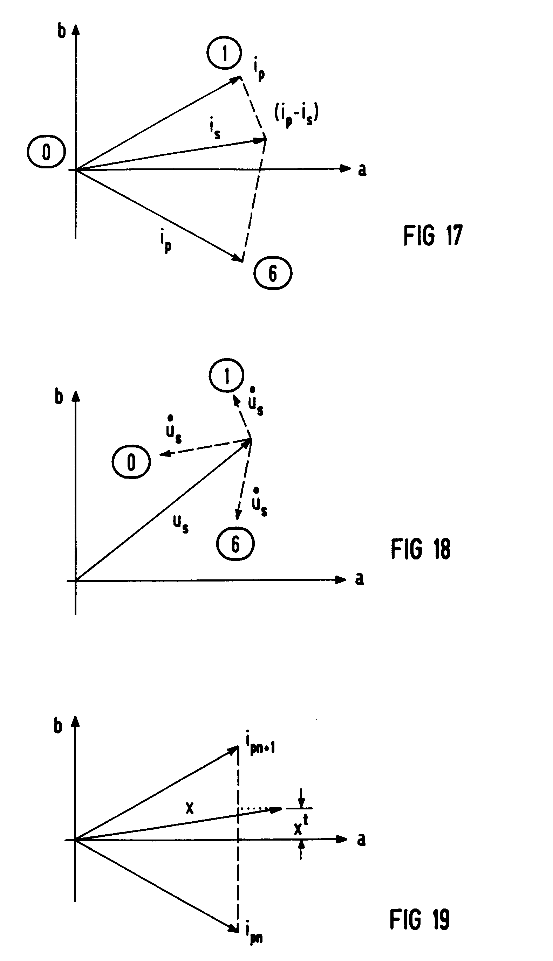

ten Dreieck (Figur 17). Die Ständerspannung $u_s$ läßt sich daher nicht mehr in jeder Richtung beeinflussen, dargestellt in der Figur 18. In dem Zeigerdiagramm gemäß Figur 18 wäre ein Aufbau der Spannung $u_s$ in Richtung der positiven a-Achse nicht mehr möglich. Ein geschlossenes Dreieck als Ortskurve der Ständerspannung $u_s$ gemäß Figur 12 kann man nur mit einer negativen Zeit (hier die Zeit für den Vektor O) erreichen. Das ist natürlich kein sinnvolles Ergebnis. Man muß daher die Gleichungen modifizieren.

Der Vektor, der mit einer negativen Zeit bewertet wurde (hier der Vektor O) wird weggelassen und nicht mehr zur Schaltzeitenberechnung herangezogen. Ein Einfluß in der senkrechten Richtung zur Verbindungslinie der übrig gebliebenen Vektoren $i_{p1}$ und $i_{p6}$ kann nicht mehr erreicht werden. Man muß sich damit begnügen, nur den Anteil des Sollstromes tangential zur Verbindungslinie richtig einzustellen. Alle Größen zur Berechnung der Schaltzeitpunkte werden daher auf diese Verbindungslinie projiziert. Es bleibt nur eine Dimension übrig.

Sei $x^t$ die Projektion der Größe x auf die Verbindungslinie der Vektoren $i_{pn}$ und $i_{pn+1}$, so gilt nach Figur 19:

$$x^t = \frac{Re\{ \overline{x}(i_{pn} - i_{pn+1})\}}{|(i_{pn} - i_{pn+1})|} \quad (13)$$

Damit wird aus der Gleichung für die anteilige Zeit gemäß Gleichung (4) ein System zweiter Ordnung:

$$\begin{bmatrix} \dot{u}_{sn}^t & \dot{u}_{sn+1}^t \\ 1 & 1 \end{bmatrix} \begin{bmatrix} T_n \\ T_{n+1} \end{bmatrix} = \begin{bmatrix} 0 \\ T_{ges} \end{bmatrix} \quad (14)$$

Der nächste Eckpunkt der nun eindimensionalen Soll-Trajektorie ergibt sich aus:

$$(u_{so}^t + u_s^{t}) T_{ges} + \dot{u}_{sn}^t (\frac{T_n^2}{2} + T_n T_{n+1}) + \dot{u}_{sn+1}^t (\frac{T_{n+1}^2}{2}) = 0 \quad (15)$$

Die verbleibende Zeit bis zur nächsten Umschaltung ist damit sofort ablesbar:

$$(t_s - t_o) = \frac{u_{so}^t - u_s^t(t_o)}{\dot{u}_{sn}^t} \quad (16)$$

Damit hat man zwar die Möglichkeit, weiterhin richtige Schaltzeiten zu erzeugen, aber mit der Einschränkung, daß kein Einfluß mehr auf die Komponenten senkrecht zur Verbindungslinie der möglichen Stromvektoren $i_{pn}$ und $i_{pn+1}$ zu besitzen.

Im allgemeinen werden drei Vektoren zur Schaltzeitenberechnung herangezogen. Welche der sieben Möglichkeiten (Figur 9) sind nun die richtigen?

Um bei gegebener Schaltfrequenz $f_s$ möglichst wenig Oberschwingungen zu erzeugen, sollten immer die Vektoren gewählt werden, die eine möglichst geringe Abweichung vom Sollwert produzieren, also die Vektoren, die dem Soll-Umrichterstrom $i_p^*$ am nächsten liegen (Figur 9). Dabei gilt:

$$i_p^* = i_s^* + j \dot{p} C u_s^*.$$

Es soll aber auch darauf geachtet werden, daß beim Übergang zwischen zwei Vektortripeln nicht unnötige Schalthandlungen auftreten. Es ist also nur ein Übergang zwischen benachbarten Sektoren sinnvoll und auch nur dann, wenn gerade der Vektor $i_p$ eingeschaltet ist, der benachbarte Sektoren verbindet und in beiden Vektortripeln enthalten ist. Dabei kann der Nullvektor nicht als gemeinsamer, in beiden Vektortripeln enthaltener, Vektor angesehen werden, da es für ihn drei verschiedene Schaltvarianten gemäß Figur 5 gibt, aber in jedem Sektor nur eine davon sinnvoll ist und benachbarte Sektoren keinen gemeinsamen Nullvektor besitzen. Die Figur 9 zeigt, daß bei einem vorgegebenen Vektor $i_p^*$ nur die drei benachbarten Vektoren $i_{p1}$, $i_{p6}$ und $i_{p0}$l sinnvoll sind, da sie zum Sollvektor $i_p^*$ den kleinsten Abstand besitzen.

Als weiterer Freiheitsgrad bei der Bestimmung der Schaltzeitpunkte bleibt noch die Reihenfolge oder der Umlaufsinn mit dem das gewählte Vektortripel durchlaufen wird.

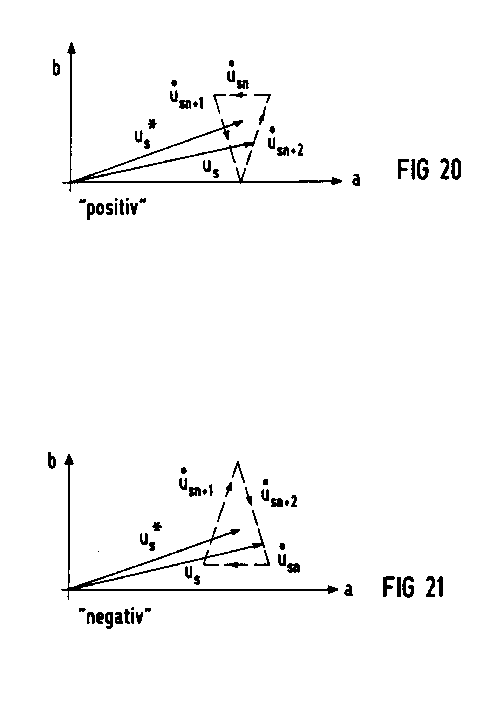

Aus den drei unterschiedlichen Richtungen der Ableitung der Ständerspannung $\dot{u}_{sn}$, $\dot{u}_{sn+1}$ und $\dot{u}_{sn+2}$ wird ein Dreieck als Ortskurve der Ständerspannung $u_s$ konstruiert. Bei gleichem Mittelwert und gleichem Oberschwingungsgehalt gibt es jedoch zwei Orientierungen für das Dreieck, je nachdem in welcher Reihenfolge das Vektortripel durchlaufen wird. Die Figuren 20 und 21 zeigen zwei verschiedene Möglichkeiten.

Prinzipiell ist es völlig gleich, welche Reihenfolge gewählt wird, doch sollte dies - wie bereits erwähnt - am besten beibehalten werden. Sobald aber ein neues Vektortripel gewählt wurde oder wenn sich dies Sollwerte ändern, kann es besser sein, die Reihenfolge zu vertauschen. Es muß dann entschieden werden, welche Reihenfolge zu den gegebenen Anfangswerten besser paßt.

Beim Durchlaufen des Dreiecks im mathematisch positiven Sinn, dargestellt in Figur 20, liegt der Sollwert $u_s^*$ stets links der Trajektorie TR*, während er anderenfalls rechts davon liegt, dargestellt in der Figur 21. Bei gegebener Spannung $u_s$ mit Sollwert $u_s^*$ und gegebener Ableitung $\dot{u}_s$ läßt sich daher sofort sagen, welcher Umlauf besser ist. Es gilt:

$$( u_s - u_s^* ) \odot \dot{u}_s \begin{cases} > 0 \rightarrow \text{positive Umlaufrichtung} \\ < 0 \rightarrow \text{negative Umlaufrichtung} \end{cases} \qquad (17)$$

mit dem Operator $\odot$ definiert als

$$x \odot y = x_1 * y_2 - x_2 * y_1 \qquad (18)$$

Bisher wurde davon ausgegangen, daß sich alle Schaltzeiten aus der Berechnung realisieren lassen. Tatsächlich läßt sich das nicht immer erreichen. Es treten an drei Punkten Schwierigkeiten auf:

- Bei Sollwertänderung.
- Durch die Mindestein- und -ausschaltzeiten der Halbleiter-Bauelemente.
- Durch die zeitdiskrete Arbeitsweise des Rechners.

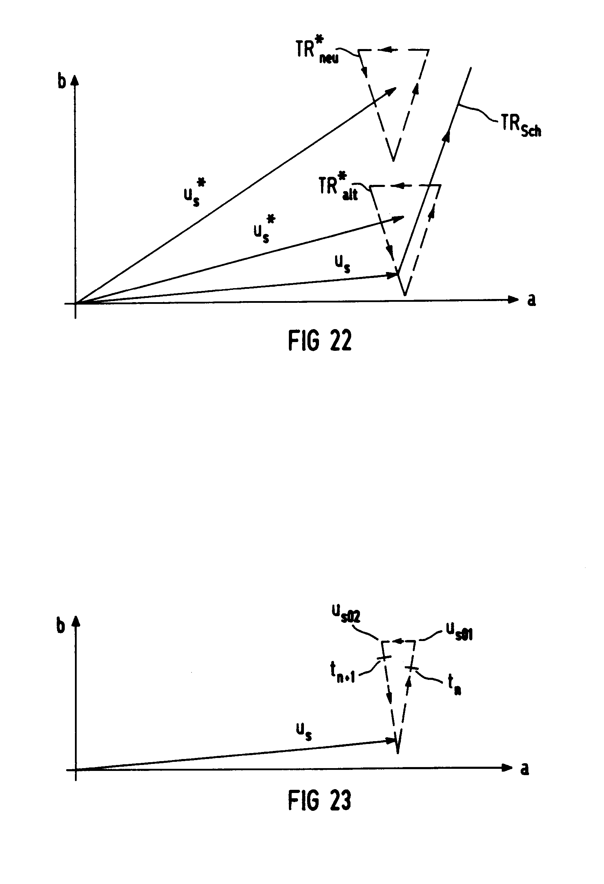

Ändert sich der Sollwert $u_s^*$ der Spannung sprungförmig, kann es vorkommen, daß der Sollvektor $u_s^*$ nicht mehr innerhalb der berechneten Soll-Trajektorie $TR_{alt}^*$ der Spannung $u_s$ liegt und darüber hinaus sich der Istvektor $u_s$ vom Sollwert $u_s^*$ wegbewegt, dargestellt in der Figur 22. In diesem Fall wird eine negative Zeitdifferenz bis zum nächsten Umschaltpunkt berechnet. Die beste Alternative ist in diesem Fall, sofort diese Schalthandlung auszuführen. Dies ist dargestellt durch eine Trajektorie $TR_{Sch}$. Diese Variation ergibt sich automatisch, da die Gleichung (8) eine negative Zeit liefert, die nur durch eine sofortige Umschaltung angenähert werden kann.

Um die abschaltbaren Stromrichterventile des Stellgliedes 8 nicht zu zerstören, muß auf die Mindestein- und -ausschaltzeiten geachtet werden, da sonst die Bauelemente durch Stromeinschnürungen ungleichmäßig belastet und daher zu heiß werden kann. Die Mindesteinschaltzeit liegt je nach Ausführung und Beschaltung im Bereich zwischen 20 und 200 µsec. Als Mindestausschaltzeit kann der doppelte Wert angenommen werden. Da die Umrichterströme $i_p$ nicht gemessen, aber zur Regelung berücksichtigt werden, darf man die Mindestzeiten nicht allein durch die Hardware überwachen lassen, sondern muß diese Begrenzung auch im Rechner nachbilden sowie die veränderten Schaltzeiten an den Steuersatz ausgeben und in die weiteren Rechnungen mit einbeziehen.

Bisher wurde angenommen, daß die Berechnung der Schaltzeitpunkte unendlich schnell ausgeführt wird und die Schaltzeiten stets zur Verfügung stehen. Durch die diskrete Arbeitsweise des Rechners und die endliche Abtastzeit wird in jedem Abtastintervall nur ein Schaltzeitpunkt errechnet. Ist die Differenz zwischen zwei Schaltzeitpunkten kleiner als die Abtastzeit, müssen in einem Abtastintervall $t_{n+1} - t_n$ mindestens zwei Schaltzeitpunkte errechnet werden (Figur 23), auch wenn diese nicht immer im nächsten Abtastintervall realisiert werden. Es ist also eine zweistufige Berechnung mit folgender Reihenfolge nötig:

- Berechnung des ersten Schaltzeitpunktes wie beschrieben.
- Berücksichtigung der Mindestschaltzeiten.
- Schätzung der Kondensatorspannung zu diesem Zeitpunkt unter Verwertung der bisherigen Ergebnisse.
- Berechnung des Sollwertes der Kondensatorspannung am nächsten Umschaltpunkt wie bei der ersten Berechnung.
- Berechnung der Zeitdifferenz bis zum Umschaltpunkt.
- Berücksichtigung der Mindestschaltzeiten.

Solange die Abtastfrequenz mindestens doppelt so hoch ist wie die Schaltfrequenz $f_s$ ist, werden mit dieser zweistufigen Vorausberechnung gute Ergebnisse erzielt. Bei kleineren Abtastfrequenzen müssen noch weitere Berechnungsschritte hinzugefügt werden, wobei aber durch diese Extrapolation in die Zukunft die Unsicherheit gegenüber äußeren Einflüssen zunimmt.

Wie bereits erwähnt, ist das erfindungsgemäße Verfahren zur Regelung eines zweidimensionalen Vektors $u_s$, einer Strecke 10, 12 mittels eines wertdiskreten Stellgliedes 8 mit begrenzter Schaltfrequenz $f_s$ für ein besseres Verständnis als hardwaremäßiges Blockschaltbild in der Figur 7 näher dargestellt. Dabei ist das einphasige Ersatzschaltbild nach Figur 2 zugrundegelegt worden. Die Schaltungsanordnung 32 ermittelt aus den Eingangsgrößen $u_s^*$, $i_s^*$ und $i_p$ mittels eines skalaren Operators 34, definiert in Gleichung (18), eines Komparators 36 und eines Sektorzählers 38 einen entsprechenden Sektor, in dem sich der Sollwert des Umrichterstromes $i_p^*$ aufhält. Mittels der anderen Eingangsgrößen $i_s$, $i_p$, $u_s$, $u_s^*$, $\dot{\rho}$ und C dieser Schaltungsanordnung 32 wird in Verbindung mit Vergleichern 40 und 42, eines Addierers 44, eines skalaren Operators 46 und eines Komparators 48 die Reihenfolge eines mittels eines Blockes 50 ausgewählten Vektortripels $i_{p1}$, $i_{p2}$ und $i_{p3}$ bestimmt. Mittels des Vektortripels $i_{p1}$, $i_{p2}$ und $i_{p3}$ und der Eingangsgrößen $u_s^*$, $i_s^*$ und $\dot{\rho}$ werden drei Spannungs-Gradienten $\dot{u}_{s1}, \dot{u}_{s2}$ und $\dot{u}_{s3}$ berechnet, veranschaulicht durch einen Block 52. Mit diesen Spannungs-Gradienten $\dot{u}_{s1}$, $\dot{u}_{s2}$ und $\dot{u}_{s3}$ und der Gleichung (4), veranschaulicht durch einen Block 54, erhält man die Verweildauern der einzelnen Stromzeiger $i_{p1}$, $i_{p2}$ und $i_{p3}$ des ausgewählten Vektortripel. Mit diesen ermittelten Verweildauern $T_1$, $T_2$ und $T_3$ und der Gleichung (6), verkörpert durch den Block 56, wird die Lage der Soll-Trajektorie TR* bestimmt, d.h. ein Eckpunkt $u_{so}$ bzw. $\Delta u_{so}$ wird bestimmt. Damit ein Spannungsvektor $u_s$ in der Soll-Trajektorie TR* einläuft, muß der Schaltzeitpunkt so gewählt werden, daß der Abstand zwischen dem Spannungsvektor $u_s$ und dem nächstgelegenen Eckpunkt $u_{so}$ zum Schaltpunkt minimal wird. Mittels der Gleichung (8), verkörpert durch den Block 58 und dem Eckpunkt $u_{so}$ und einem Spannungs-Gradienten $\dot{u}_s$, erhält man die verbleibende Zeit $t_s$ bis zum nächsten Umschaltpunkt. Diese Zeit $t_s$ wird mittels eines Tors 60, das die Mindestschaltzeit eines abschaltbaren Stromrichterventils des Stellgliedes 8 beinhaltet, an einen Steuersatz 62 weitergegeben, dem zusätzlich eine Sektornummer zugeführt wird. Eine hardwaremäßige Ausführung des Steuersatzes 62 ist in Figur 8 näher dargestellt. An den Ausgängen des Steuersatzes 62 stehen die Schaltzustände $S_v$ für das Stellglied 8 an.

Der Steuersatz 62 nach Figur 8 enthält eingangsseitig ein Schieberegister 64, in denen eine Sektornummer und eine Zeit $t_s$ fortlaufend eingelesen wird, und ausgangsseitig ein Übernahmeregister 66. Die Sektornummern werden direkt dem Übernahmeregister 66 zugeführt, wobei die Zeit $t_s$ einem Vergleicher 68 zugeführt wird, dessen anderer Eingang mit einem Zähler 70 verbunden ist. Der Zähler 70 ist auf eine Abtastzeit $t_n$ eingestellt. Wird dieser Zählerstand erreicht, so wird ein Interrupt-Signal $S_{INT}$ generiert. Ist die verbleibende Zeit $t_s$ größer als die eingestellte Abtastzeit $t_n$, so wird diese Zeit $t_s$ nicht an das Übernahmeregister 6 übergeben.

Das erfindungsgemäße Verfahren und die Schaltungsanordnung 32 zur Durchführung des Verfahrens weisen folgende Vorteile auf:

- Die Kondensatorspannung $u_s$ wird möglichst nahe am Sollwert $u_s^*$ gehalten.
- Es werden keine Resonanzen angeregt und vorhandene Schwingungen schnell ausgeregelt.
- Der gerforderte Maschinenstrom $i_s$ wird schon durch die Modulation richtig eingestellt.
- Die Oberschwingungen werden minimiert.
- Die Anregelzeit für Spannung $u_s$ und Strom $i_s$ ist äußerst kurz.
- Die Regelung ist robust gegenüber Parameteränderungen und Randbedingungen des Umrichters.

## Patentansprüche

1. Verfahren zur Regelung eines zweidimensionalen Vektors ($y_s$, $u_s$, $i_s$) einer Strecke (10,12) mittels eines wertediskreten Stellgliedes (8) mit begrenzter Schaltfrequenz ($f_s$), wobei der Sollwert ($y_s^*$, $u_s^*$, $i_s^*$) dieses zweidimensionalen Vektors ($y_s$, $u_s$, $i_s$) im zeitlichen Mittel durch drei ausgewählte, zu einem Stellgrößen-Sollwert ($x^*$, $i_p^*$, $u_p^*$) benachbarten Stellgrößen-Istwerte ($x_n$, $i_{pn}$, $u_{pn}$) approximiert werden, wobei diese drei ausgewählten Stellgrößen-Istwerte ($x_n$, $i_{pn}$, $u_{pn}$) während einer Schaltperiode ($T_{ges}$) in einer vorbestimmten Reihenfolge und vorbestimmten Verweildauern ($T_n$, $T_{n+1}$, $T_{n+2}$) so abzuwechseln sind, daß der Mittelwert des Ist-Vektors ($y_s$, $u_s$, $i_s$) über einen Umlauf einer durch die Stellgrößen-Istwerte ($x_n$, $i_{pn}$, $u_{pn}$) gebildete Soll-Trajektorie (TR*) gleich seinem Sollwert ($y_s^*$, $u_s^*$, $i_s^*$) ist und daß genau dann von einem Stellgrößen-Istwert ($x_n$, $i_{pn}$, $u_{pn}$) zum nächsten Stellgrößen-Istwert ($x_{n+1}$, $i_{pn+1}$, $u_{pn+1}$) umgeschaltet wird, wenn der Abstand zwischen dem Ist-Vektor ($y_s$, $u_s$, $i_s$) und eines nächsten Eckpunktes ($x_{so}$, $u_{so}$, $i_{so}$) der gebildeten Soll-Trajektorie (TR*) minimal ist.

2. Verfahren nach Anspruch 1, **dadurch gekennzeichnet,** daß die Verweildauern ($T_n$, $T_{n+1}$, $T_{n+2}$) der Stellgrößen-Istwerte ($x_n$, $i_{pn}$, $u_{pn}$) derartig berechnet sind, daß das Integral über eine Soll-Ist-Differenz ($y_s - y_s^*$, $u_s - u_s^*$, $i_s - i_s^*$) des Ist-Vektors ($y_s$, $u_s$, $i_s$) während einer Schaltperiode ($T_{ges}$) zu Null wird.

3. Verfahren nach Anspruch 1, **dadurch gekennzeichnet,** daß die anteiligen Verweildauern ($T_n$, $T_{n+1}$, $T_{n+2}$) der drei ausgewählten Stellgrößen-Istwerte ($x_n$, $x_{n+1}$, $x_{n+2}$) gemäß folgendem Gleichungssystem:

$$
\begin{bmatrix} \dot{y}_{sn} & \dot{y}_{sn+1} & \dot{y}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix} \tag{4}
$$

ermittelt werden.

4. Verfahren nach Anspruch 1, **dadurch gekennzeichnet,** daß die anteiligen Verweildauern $(T_n, T_{n+1}, T_{n+2})$ der drei ausgewählten Stellgrößen-Istwerte $(i_{pn}, i_{pn+1}, i_{pn+2})$ gemäß folgendem Gleichungssystem:

$$
\begin{bmatrix} \dot{u}_{sn} & \dot{u}_{sn+1} & \dot{u}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix}
$$

ermittelt werden.

5. Verfahren nach Anspruch 1, **dadurch gekennzeichnet,** daß die anteiligen Verweildauern $(T_n, T_{n+1}, T_{n+2})$ der drei ausgewählten Stellgrößen-Istwerte $(u_{pn}, u_{pn+1}, u_{pn+2})$ gemäß folgendem Gleichungssystem:

$$
\begin{bmatrix} \dot{i}_{sn} & \dot{i}_{sn+1} & \dot{i}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix}
$$

ermittelt werden.

6. Verfahren nach Anspruch 1, **dadurch gekennzeichnet,** daß ein Eckpunkt $(y_{so})$ der gebildeten Soll-Trajektorie $(TR^*)$ gemäß folgender Gleichung:

$$
(y_{so} - y_s^*)T_{ges} + \dot{y}_{sn}\left(\frac{T_n^2}{2} + T_n T_{n+1} + T_n T_{n+2}\right) + \dot{y}_{sn+1}\left(\frac{T_{n+1}^2}{2} + T_{n+1} T_{n+2}\right) + \dot{y}_{sn+2}\frac{T_{n+2}^2}{2} = 0
$$

ermittelt wird.

7. Verfahren nach Anspruch 1, **dadurch gekennzeichnet,** daß ein Eckpunkt $(u_{so})$ der gebildeten Soll-Trajektorie $(TR^*)$ gemäß folgender Gleichung:

$$
(u_{so} + u_s^*)T_{ges} + \dot{u}_{sn}\left(\frac{T_n^2}{2} + T_n T_{n+1} + T_n T_{n+2}\right) + \dot{u}_{sn+1}\left(\frac{T_{n+1}^2}{2} + T_{n+1} T_{n+2}\right) + \dot{u}_{sn+2}\frac{T_{n+2}^2}{2} = 0
$$

ermittelt wird.

8. Verfahren nach Anspruch 1, **dadurch gekennzeichnet,** daß ein Eckpunkt $(i_{so})$ der gebildeten Soll-Trajektorie $(TR^*)$ gemäß folgender Gleichung:

$$
(i_{so} - i_s^*)T_{ges} + \dot{i}_{sn}\left(\frac{T_n^2}{2} + T_n T_{n+1} + T_n T_{n+2}\right) + \dot{i}_{sn+1}\left(\frac{T_{n+1}^2}{2} + T_{n+1} T_{n+2}\right) + \dot{i}_{sn+2}\frac{T_{n+2}^2}{2} = 0
$$

ermittelt wird.

9. Verfahren nach Anspruch 1, **dadurch gekennzeichnet,** daß eine verbleibende Zeit $(t_s)$ bis zu einem Umschaltpunkt $(y_{so})$ gemäß folgender Gleichung:

$$
(t_s - t_o) = \frac{\dot{y}_{s1}(y_{so1} - y_{s1}(t_o)) + \dot{y}_{s2}(y_{so2} - y_{s2}(t_o))}{\dot{y}_{s1}^2 + \dot{y}_{s2}^2}
$$

ermittelt wird.

10. Verfahren nach Anspruch 1, **dadurch gekennzeichnet,** daß eine verbleibende Zeit $(t_s)$ bis zu einem Umschaltpunkt $(u_{so})$ gemäß folgender Gleichung:

$$
(t_s - t_o) = \frac{\dot{u}_{s1}(u_{so1} - u_{s1}(t_o)) + \dot{u}_{s2}(u_{so2} - u_{s2}(t_o))}{\dot{u}_{s1}^2 + \dot{u}_{s2}^2}
$$

ermittelt wird.

11. Verfahren nach Anspruch 1, **dadurch gekennzeichnet,** daß eine verbleibende Zeit ($t_s$) bis zu einem Umschaltpunkt ($i_{so}$) gemäß folgender Gleichung:

$$(t_s - t_o) = \frac{i_{s1}(i_{so1} - i_{s1}(t_o)) + i_{s2}(i_{so2} - i_{s2}(t_o))}{i_{s1}^2 + i_{s2}^2}$$

ermittelt wird.

12. Verfahren nach Anspruch 9, **dadurch gekennzeichnet,** daß, wenn für die verbleibende Zeit ($t_s$) ein negativer Wert ermittelt wird, sofort auf den nächsten Stellgrößen-Istwert ($x_{n+1}$ bzw. $x_{n+2}$ bzw. $x_n$) umgeschaltet wird.

13. Verfahren nach Anspruch 10, **dadurch gekennzeichnet,** daß, wenn für die verbleibende Zeit ($t_s$) ein negativer Wert ermittelt wird, sofort auf den nächsten Stellgrößen-Istwert ($i_{pn+1}$ bzw. $i_{pn+2}$ bzw. $i_{pn}$) umgeschaltet wird.

14. Verfahren nach Anspruch 11, **dadurch gekennzeichnet,** daß, wenn für die verbleibende Zeit ($t_s$) ein negativer Wert ermittelt wird, sofort auf den nächsten Stellgrößen-Istwert ($u_{pn+1}$ bzw. $u_{pn+2}$ bzw. $u_{pn}$) umgeschaltet wird.

15. Verfahren nach Anspruch 3, **dadurch gekennzeichnet,** daß, wenn für eine Verweildauer ($T_n$ bzw. $T_{n+1}$ bzw. $T_{n+2}$) ein negativer Wert ermittelt wird, der zugehörige Stellgrößen-Istwert ($x_n$ bzw. $x_{n+1}$ bzw. $x_{n+2}$) für die Berechnung der Schaltzeit nicht berücksichtigt wird.

16. Verfahren nach Anspruch 4, **dadurch gekennzeichnet,** daß, wenn für eine Verweildauer ($T_n$ bzw. $T_{n+1}$ bzw. $T_{n+2}$) ein negativer Wert ermittelt wird, der zugehörige Stellgrößen-Istwert ($i_{pn}$ bzw. $i_{pn+1}$ bzw. $i_{pn+2}$) für die Berechnung der Schaltzeit nicht berücksichtigt wird.

17. Verfahren nach Anspruch 5, **dadurch gekennzeichnet,** daß, wenn für eine Verweildauer ($T_n$ bzw. $T_{n+1}$ bzw. $T_{n+2}$) ein negativer Wert ermittelt wird, der zugehörige Stellgrößen-Istwert ($u_{pn}$ bzw. $u_{pn+1}$ bzw. $u_{pn+2}$) für die Berechnung der Schaltzeit nicht berücksichtigt wird.

18. Schaltungsanordnung zur Durchführung des Verfahrens nach Anspruch 1, **dadurch gekennzeichnet,** daß ein Mikroprozessor (32) vorgesehen ist, wobei nach einem Interrupt-Signal ($S_{INT}$), der zyklisch in einem festen Zeitraster ausgelöst wird, die Istwerte ($u_s, i_s$) und die Sollwerte ($u_s^*, i_s^*$) in diesen Mikroprozessor (32) eingelesen werden, und daß am Ausgang des Mikroprozessors (32) eine verbleibende Zeit ($t_s$) und die Vektornummer (n) des zugehörigen Stellgrößen-Istwertes ($i_{pn}$) anstehen.

19. Schaltungsanordnung nach Anspruch 18, **dadurch gekennzeichnet,** daß an den Ausgängen des Mikroprozessors (32) mehrere Schaltsignale (S ) anstehen.

## Claims

1. Method for regulating a two-dimensional vector ($y_s, u_s, i_s$) of a controlled system (10, 12) by means of a discrete-value final controlling element (8) having limited switching frequency ($f_s$), in which the reference value ($y_s^*, u_s^*, i_s^*$) of this two-dimensional vector ($y_s, u_s, i_s$) is approximated as a mean value over time by means of three selected manipulated variable actual values ($x_n, i_{pn}, u_{pn}$) adjacent to a manipulated variable reference value ($x^* i_p^*, u_p^*$, in which case these three selected manipulated variable actual values ($x_n, i_{pn}, u_{pn}$) are to be alternated during a switching period ($T_{ges}$) in a predetermined sequence and at predetermined interval times ($T_n, T_{n+1}, T_{n+2}$) such that the mean value of the actual vector ($y_s, u_s, i_s$), while passing over a reference trajectory (TR*) formed by the manipulated variable actual values ($x_n, i_{pn}, u_{pn}$), is equal to its reference value ($y_s^*, u_s^*, i_s^*$) and there is a switch-over from one manipulated variable actual value ($x_n, i_{pn}, u_{pn}$) to the next manipulated variable actual value ($x_{n+1}, i_{pn+1}, u_{pn+1}$) precisely when the distance between the actual vector ($y_s, u_s, i_s$) and a next corner point ($x_{so}, u_{so}, i_{so}$) of the reference trajectory (TR*) formed is at a minimum.

2. Method according to claim 1, characterised in that the interval times ($T_n, T_{n+1}, T_{n+2}$) of the manipulated

variable actual values ($x_n$, $i_{pn}$, $u_{pn}$) are calculated in such a way that the integral of a difference ($y_s - y_s^*$, $u_s - u_s^*$, $i_s - i_s^*$, of the actual vector ($y_s$, $u_s$, $i_s$) becomes zero during a switching period ($T_{ges}$).

3. Method according to claim 1, characterised in that the proportional interval times ($T_n$, $T_{n+1}$, $T_{n+2}$) of the three selected manipulated variable actual values ($x_n$, $x_{n+1}$, $x_{n+2}$) are determined according to the following equation system:

$$
\begin{bmatrix}
\dot{y}_{sn} & \dot{y}_{sn+1} & \dot{y}_{sn+2} \\
1 & 1 & 1
\end{bmatrix}
\begin{bmatrix}
T_n \\
T_{n+1} \\
T_{n+2}
\end{bmatrix}
=
\begin{bmatrix}
0 \\
T_{ges}
\end{bmatrix}
\qquad (4)
$$

4. Method according to claim 1, characterised in that the proportional interval times ($T_n$, $T_{n+1}$, $T_{n+2}$) of the three selected manipulated variable actual values ($i_{pn}$, $i_{pn+1}$, $i_{pn+2}$) are determined according to the following equation system:

$$
\begin{bmatrix}
\dot{u}_{sn} & \dot{u}_{sn+1} & \dot{u}_{sn+2} \\
1 & 1 & 1
\end{bmatrix}
\begin{bmatrix}
T_n \\
T_{n+1} \\
T_{n+2}
\end{bmatrix}
=
\begin{bmatrix}
0 \\
T_{ges}
\end{bmatrix}
$$

5. Method according to claim 1, characterised in that the proportional interval times ($T_n$, $T_{n+1}$, $T_{n+2}$) of the three selected manipulated variable actual values ($u_{pn}$, $u_{pn+1}$, $u_{pn+2}$) are determined according to the following equation system:

$$
\begin{bmatrix}
\dot{i}_{sn} & \dot{i}_{sn+1} & \dot{i}_{sn+2} \\
1 & 1 & 1
\end{bmatrix}
\begin{bmatrix}
T_n \\
T_{n+1} \\
T_{n+2}
\end{bmatrix}
=
\begin{bmatrix}
0 \\
T_{ges}
\end{bmatrix}
$$

6. Method according to claim 1, characterised in that a corner point ($y_{so}$) of the reference trajectory (TR*) formed is determined according to the following equation:

$$
(y_{so} - y_s^*)T_{ges} + \dot{y}_{sn}\left(\frac{T_n^2}{2} + T_nT_{n+1} + T_nT_{n+2}\right) + \dot{y}_{sn+1}\left(\frac{T_{n+1}^2}{2} + T_{n+1}T_{n+2}\right) + \dot{y}_{sn+2}\frac{T_{n+2}^2}{2} = 0
$$

7. Method according to claim 1, characterised in that a corner point ($u_{so}$) of the reference trajectory (TR*) formed is determined according to the following equation:

$$
(u_{so} - u_s^*)T_{ges} + \dot{u}_{sn}\left(\frac{T_n^2}{2} + T_nT_{n+1} + T_nT_{n+2}\right) + \dot{u}_{sn+1}\left(\frac{T_{n+1}^2}{2} + T_{n+1}T_{n+2}\right) + \dot{u}_{sn+2}\frac{T_{n+2}^2}{2} = 0
$$

8. Method according to claim 1, characterised in that a corner point ($i_{so}$) of the reference trajectory (TR*) formed is determined according to the following equation:

$$
(i_{so} - i_s^*)T_{ges} + \dot{i}_{sn}\left(\frac{T_n^2}{2} + T_nT_{n+1} + T_nT_{n+2}\right) + \dot{i}_{sn+1}\left(\frac{T_{n+1}^2}{2} + T_{n+1}T_{n+2}\right) + \dot{i}_{sn+2}\frac{T_{n+2}^2}{2} = 0
$$

9. Method according to claim 1, characterised in that an amount of time ($t_s$) remaining up to a switch-over point ($y_{so}$) is determined according to the following equation:

$$
(t_s - t_o) = \frac{\dot{y}_{s1}(y_{so1} - y_{s1}(t_o)) + \dot{y}_{s2}(y_{so2} - y_{s2}(t_o))}{\dot{y}_{s1}^2 + \dot{y}_{s2}^2}
$$

10. Method according to claim 1, characterised in that an amount of time ($t_s$) remaining up to a switch-over point ($u_{so}$) is determined according to the following equation:

$$
(t_s - t_o) = \frac{\dot{u}_{s1}(u_{so1} - u_{s1}(t_o)) + \dot{u}_{s2}(u_{so2} - u_{s2}(t_o))}{\dot{u}_{s1}^2 + \dot{u}_{s2}^2}
$$

15

11. Method according to claim 1, characterised in that an amount of time $(t_s)$ remaining up to a switch-over point $(i_{so})$ is determined according to the following equation:

$$(t_s - t_o) = \frac{\dot{i}_{s1}(i_{so1} - i_{s1}(t_o)) + \dot{i}_{s2}(i_{so2} - i_{s2}(t_o))}{\dot{i}^2_{s1} + \dot{i}^2_{s2}}$$

12. Method according to claim 9, characterised in that if a negative value is determined for the amount of time $(t_s)$ remaining, a switch to the next manipulated variable actual value $(x_{n+1}$ or $x_{n+2}$ or $x_n$ respectively) takes place immediately.

13. Method according to claim 10, characterised in that if a negative value is determined for the amount of time $(t_s)$ remaining, a switch to the next manipulated variable actual value $(i_{pn+1}$ or $i_{pn+2}$ or $i_{pn}$ respectively) takes place immediately.

14. Method according to claim 11, characterised in that if a negative value is determined for the amount of time $(t_s)$ remaining, a switch to the next manipulated variable actual value $(u_{pn+1}$ or $u_{pn+2}$ or $u_{pn}$ respectively) takes place immediately.

15. Method according to claim 3, characterised in that if a negative value is determined for an interval time $(T_n$ or $T_{n+1}$ or $T_{n+2})$, the associated manipulated variable actual value $(x_n$ or $x_{n+1}$ or $x_{n+2}$ respectively) is not taken into consideration for the calculation of the switching time.

16. Method according to claim 4, characterised in that if a negative value is determined for an interval time $(T_n$ or $T_{n+1}$ or $T_{n+2})$, the associated manipulated variable actual value $(i_{pn}$ or $i_{pn+1}$ or $i_{pn+2}$ respectively) is not taken into consideration for the calculation of the switching time.

17. Method according to claim 5, characterised in that if a negative value is determined for an interval time $(T_n$ or $T_{n+1}$ or $T_{n+2})$, the associated manipulated variable actual value $(u_{pn}$ or $u_{pn+1}$ or $u_{pn+2}$ respectively) is not taken into consideration for the calculation of the switching time.

18. Circuit arrangement for carrying out the method according to claim 1, characterised in that a microprocessor (32) is provided, with the actual values $(u_s, i_s)$ and the reference values $(u_s^*, i_s^*$, being input into this microprocessor (32) after an interrupt signal $(S_{INT})$ which is cyclically triggered in a fixed time-slot pattern, and in that an amount of time $(t_s)$ remaining and the vector number (n) of the associated manipulated variable actual value $(i_{pn})$ occur as values at the output of the microprocessor (32).

19. Circuit arrangement according to claim 18, characterised in that several switching signals (S) occur at the outputs of the microprocessor (32).

## Revendications

1. Procédé de régulation d'un vecteur bidimensionnel $(y_s, u_s, i_s)$ d'une section (10, 12) au moyen d'un organe de réglage numérique (8) à fréquence de commutation limitée $(f_s)$, la valeur de consigne $(y_s^*, u_s^*, i_s^*)$ de ce vecteur bidimensionnel $(y_s, u_s, i_s)$ étant approchée dans le dispositif d'horloge au moyen de trois valeurs réelles $(x_n, i_{pn}, u_{pn})$ de grandeurs de réglage, choisies, proches d'une valeur de consigne $(x^*, i_p^*, u_p^*)$ de grandeurs de réglage, ces trois valeurs réelles $(x_n, i_{pn}, u_{pn})$ de grandeur de réglage choisies devant être interverties pendant la durée d'une période de commutation $(T_{ges})$ selon un ordre fixé à l'avance et pendant des temps d'application $(T_n, T_{n+1}, T_{n+2})$ fixés à l'avance, de façon telle que la valeur moyenne du vecteur réel $(y_s, u_s, i_s)$ soit égale, sur un cycle d'une trajectoire $(TR^*)$ de consigne constituée par les valeurs réelles $(x_n, i_{pn}, u_{pn})$ de grandeurs de réglage, à sa valeur de consigne $(y_s^*, u_s^*, i_s^*)$ et que l'on passe d'une valeur réelle $x_n, i_{pn}, u_{pn})$ de grandeurs de réglage à la valeur réelle suivante $(x_{n+1}, I_{pn+1}, u_{pn+1})$ de grandeurs de réglage exactement à l'instant où l'écart entre le secteur réel $(y_s, u_s, i_s)$ et un sommet d'angle $(x_{so}, u_{so}, i_{so})$ de la trajectoire de consigne $(TR^*)$ formée, est minimum.

2. Procédé selon la revendication 1, caractérisé en ce que les durées d'application $(T_n, T_{n+1} T_{n+2})$ des valeurs réelles $(x_n, i_{pn} u_{pn})$ de grandeurs de réglage sont calculées de telle sorte que l'intégrale d'une différence, $(y^* - y_s, u - u_s^*, i_s - i_s^*)$ entre valeurs de consigne et valeurs réelles du vecteur réel $(y_s, u_s, i_s)$ s'annule sur une période de commutation $(T_{ges})$.

3. Procédé selon la revendication 1, caractérisé en ce que les durées partielles d'application ($T_n$, $T_{n+1}$, $T_{n+2}$) des trois valeurs réelles ($x_n$, $x_{n+1}$, $X_{n+2}$) de grandeurs de réglage qui ont été choisies, sont établies selon le système d'équation suivant :

$$\begin{bmatrix} \dot{y}_{sn} & \dot{y}_{sn+1} & \dot{y}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix} \qquad (4)$$

4. Procédé selon la revendication 1, caractérisé en ce que les durées partielles d'application ($T_n$, $T_{n+1}$, $T_{n+2}$) des trois valeurs réelles ($i_{pn}$, $i_{pn+1}$, $i_{pn+2}$) de grandeurs de réglage qui ont été choisies sont établies selon le système d'équation suivant.

$$\begin{bmatrix} \dot{u}_{sn} & \dot{u}_{sn+1} & \dot{u}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix}$$

5. Procédé selon la revendication 1, caractérisé en ce que les durées partielles d'application ($T_n$, $T_{n+1}$, $T_{n+2}$) des trois valeurs réelles ($u_{pn}$, $u_{pn+1}$, $u_{pn+2}$) de grandeurs de réglage qui ont été choisies, sont établies selon le système d'équation suivant :

$$\begin{bmatrix} \dot{i}_{sn} & \dot{i}_{sn+1} & \dot{i}_{sn+2} \\ 1 & 1 & 1 \end{bmatrix} \begin{bmatrix} T_n \\ T_{n+1} \\ T_{n+2} \end{bmatrix} = \begin{bmatrix} 0 \\ T_{ges} \end{bmatrix}$$

6. Procédé selon la revendication 1, caractérisé en ce qu'un sommet d'angle ($y_{so}$) de la trajectoire de consigne (TR*) formée, est déterminé selon l'équation suivante :

$$(y_{so} - y_s^*)T_{ges} + \dot{y}_{sn}(\frac{T_n^2}{2} + T_n T_{n+1} + T_n T_{n+2}) + \dot{y}_{sn+1}(\frac{T_{n+1}^2}{2} + T_{n+1} T_{n+2}) + \dot{y}_{sn+2}\frac{T_{n+2}^2}{2} = 0$$

7. Procédé selon la revendication 1, caractérisé en ce qu'un sommet d'angle ($u_{so}$) de la trajectoire de consigne (TR*) formée est déterminée selon l'équation suivante :

$$(u_{so} - u_s^*)T_{ges} + \dot{u}_{sn}(\frac{T_n^2}{2} + T_n T_{n+1} + T_n T_{n+2}) + \dot{u}_{sn+1}(\frac{T_{n+1}^2}{2} + T_{n+1} T_{n+2}) + \dot{u}_{sn+2}\frac{T_{n+2}^2}{2} = 0$$

8. Procédé selon la revendication 1, caractérisé en ce qu'un sommet d'angle ($u_{so}$) de la trajectoire de consigne (TR*) formée est déterminé selon l'équation suivante :

$$(i_{so} - i_s^*)T_{ges} + \dot{i}_{sn}(\frac{T_n^2}{2} + T_n T_{n+1} + T_n T_{n+2}) + \dot{i}_{sn+1}(\frac{T_{n+1}^2}{2} + T_{n+1} T_{n+2}) + \dot{i}_{sn+2}\frac{T_{n+2}^2}{2} = 0$$

9. Procédé selon la revendication 1, caractérisé en ce qu'un temps ($t_s$) résiduel jusqu'a un point de commutation ($y_{so}$) est établi selon l'équation suivante :

$$(t_s - t_o) = \frac{\dot{y}_{s1}(y_{so1} - y_{s1}(t_o)) + \dot{y}_{s2}(y_{so2} - y_{s2}(t_o))}{\dot{y}_{s1}^2 + \dot{y}_{s2}^2}$$

10. Procédé selon la revendication 1, caractérisé en ce qu'un temps résiduel ($t_s$) jusqu'à un point de commutation ($u_{so}$) est établi selon l'équation suivante :

$$(t_s - t_o) = \frac{\dot{u}_{s1}(u_{so1} - u_{s1}(t_o)) + \dot{u}_{s2}(u_{so2} - u_{s2}(t_o))}{\dot{u}_{s1}^2 + \dot{u}_{s2}^2}$$

11. Procédé selon la revendication 1, caractérisé en ce qu'un temps résiduel ($t_s$) jusqu'à un point de commutation ($i_{so}$) est établi selon l'équation suivante :

$$(t_s - t_o) = \frac{\dot{i}_{s1}(i_{so1} - i_{s1}(t_o)) + \dot{i}_{s2}(i_{so2} - i_{s2}(t_o))}{\dot{i}_{s1}^2 + \dot{i}_{s2}^2}$$

12. Procédé selon la revendication 9, caractérisé en ce que lorsque pour le temps résiduel ($t_s$) c'est une valeur négative qui est calculée, la commutation sur la valeur réelle suivante ($x_{n+1}$, ou $x_{n+2}$, ou $x_n$) de grandeurs de réglage est effectuée immédiatement.

13. Procédé selon la revendication 10, caractérisé en ce que lorsque pour le temps résiduel ($t_s$) c'est une valeur négative qui est calculée, la commutation sur la valeur réelle suivante ($i_{pn+1}$, ou $i_{pn+2}$, ou $i_{pn}$) de grandeurs de réglage est effectuée immédiatement.

14. Procédé selon la revendication 11, caractérisé en ce que lorsque pour le temps résiduel ($t_s$) c'est une valeur négative qui est calculée, la commutation sur la valeur réelle suivante ($u_{pn+1}$, ou $u_{pn+2}$, ou $u_{pn}$) de grandeurs de réglage est effectuée immédiatement.

15. Procédé selon la revendication 3, caractérisé en ce que lorsque pour une durée d'application ($T_n$ ou $T_{n+1}$ ou $T_{n+2}$) c'est une valeur négative qui est calculée, la valeur réelle ($x_n$ ou $x_{n+1}$ ou $x_{n+2}$) de grandeurs de réglage correspondante n'est pas prise en considération pour le calcul du temps de commutation.

16. Procédé selon la revendication 4, caractérisé en ce que lorsque pour une durée d'application ($T_n$ ou $T_{n+1}$ ou $T_{n+2}$) c'est une valeur négative qui est calculée, la valeur réelle ($x_n$ ou $x_{n+1}$ ou $x_{n+2}$) de grandeurs de réglage correspondante n'est pas prise en considération pour le calcul du temps de commutation.

17. Procédé selon la revendication 5, caractérisé en ce que lorsque pour une durée d'application ($T_n$ ou $T_{n+1}$ ou $T_{n+2}$) c'est une valeur négative qui est calculée, la valeur réelle correspondante ($u_{pn}$ ou $u_{pn+1}$ ou $u_{pn+2}$) de grandeurs de réglage n'est pas prise en considération pour le calcul du temps de commutation.

18. Dispositif de circuit destiné à l'exécution du procédé selon la revendication 1, caractérisé en ce qu'un microprocesseur (32) est prévu, les valeurs réelles ($u_s$, $i_s$) et les valeurs de consigne $u_s^*$, $i_s^*$) étant mises en mémoire dans cet ordinateur (32), après un signal d'interruption ($S_{INT}$)qui est déclenché cycliquement selon une trame temporelle fixe, et en ce qu'à la sortie du microprocesseur (32) un temps résiduel ($t_s$) et le numéro de vecteur (n) de la valeur de réglage réelle de grandeurs de réglage correspondant sont disponibles.

19. Dispositif de circuit selon la revendication 18, caractérisé en ce qu'aux sorties du microprocesseur (32) plusieurs signaux de commutation (S) sont disponibles.

FIG 1

FIG 2

FIG 3

FIG 4

FIG 5

FIG 6

FIG 8

FIG 7

FIG 9

FIG 10

FIG 11

FIG 12

FIG 13

FIG 14

FIG 15

FIG 16

FIG 17

FIG 18

FIG 19

FIG 20

FIG 21

FIG 22

FIG 23